(19) Europäisches Patentamt
European Patent Office
Office européen des brevets

(11) EP 2 341 087 B1

(12) **EUROPEAN PATENT SPECIFICATION**

(45) Date of publication and mention of the grant of the patent:
**09.04.2014 Bulletin 2014/15**

(51) Int Cl.:
***C08F 110/06*** *(2006.01)* ***C08F 2/00*** *(2006.01)*
***C08F 4/6592*** *(2006.01)*

(21) Application number: **09181006.9**

(22) Date of filing: **30.12.2009**

(54) **New way to produce polypropylene grade in a sequential process**

Neue Methode zur Herstellung von reinem Polypropylen in einem sequentiellen Verfahren

Nouvelle manière de produire un grade de polypropylène dans un processus séquentiel

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**06.07.2011 Bulletin 2011/27**

(73) Proprietor: **Borealis AG**
**1220 Vienna (AT)**

(72) Inventors:
- **Gloger, Dietrich**
**4020, Linz (AT)**
- **Paavilainen, Juha**
**00510 Helsinki (FI)**

(74) Representative: **Maiwald Patentanwalts GmbH**
**Elisenhof**
**Elisenstrasse 3**
**80335 München (DE)**

(56) References cited:
**EP-A1- 1 847 551**
**WO-A1-2005/023890**
**US-A1- 2003 130 443**
**US-A1- 2009 062 491**
**US-A1- 2009 221 772**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention is directed to a new sequential polymerization process for the preparation of polypropylene.

In the preparation of polypropylene mainly Ziegler-Natta catalysts or single-site catalysts are used. Nowadays there is a trend toward the use of single-site catalysts in the preparation of polypropylene. With single-site catalysts polypropylenes are producible having an extremely homogeneous and organized structure. One effect thereof is the rather low xylene cold soluble content compared to polypropylenes produced in the presence of Ziegler Natta catalysts. One problem of single-site catalysts is that they are soluble in propylene. Accordingly single-site catalyst systems have been developed, so called supported single-site catalyst systems, enabling a heterogeneous process control. Drawback of such supported catalyst systems is that catalytic residues are brought in the produced polypropylene. Such residues are for several end applications undesired and thus troublesome cleaning steps are necessary. For this reason a new single-site catalyst system has been developed which significantly reduces the drawbacks of the known heterogeneous catalyst systems. Such new catalyst systems are self-supported, i.e. are not in need of catalytically inert external support material, and are further featured by a low surface area and low porosity. Such new single-site catalyst systems do not contaminate the produced polypropylene with undesired residues, like silica, and enable to increase the output rate since the bulk density of the polymerized polypropylene can be increased. For the first time such new single-site catalyst systems have been for instance described in WO 03/051934 or in WO 2006/069733. Also in EP 1 847 552 new self-supported single-site catalyst systems are developed enabling the manufacture of multi-branched polypropylenes. But even though there is the general understanding as to how such new self-supported single-site catalysts might be beneficial for the preparation of polypropylene, there is still the desire to optimize such catalyst systems for the preparation of specific demanding polypropylenes.

For instance there is in particular the desire to develop a large scale process for the preparation of clean polypropylene having high stiffness and being high temperature resistant.

The finding of the present invention is to prepare polypropylene with a melt flow rate $MFR_2$ (230 °C) of more than 2.0 g/10min in a sequential polymerization process in the presence of a self-supported catalyst system with low porosity comprising a organo-zirconium compound of formula (I) as described in detail below.

Accordingly the present invention is directed to a process for the preparation of a polypropylene in a sequential polymerization process comprising at least two reactors connected in series, wherein said process comprises the steps of

(A) producing in a first reactor (R-1) a first polypropylene fraction (PP-1),
(B) transferring said first polypropylene fraction (PP-1) in a second reactor (R-2),
(C) polymerizing in said second reactor (R-2) and in the presence of said first polypropylene fraction (PP-1) a second polypropylene fraction (PP-2) obtaining polypropylene composition (PP-C),
wherein

(a) said first polypropylene fraction (PP-1)

(i) has a melt flow rate $MFR_2$ (230 °C) measured according to ISO 1133 of

(α) not more than 1.5 g/10min,
or
(β) of more than 2.0 g/10min,

and
(ii) comprises units derived from propylene and optionally at least one $C_2$ to $C_{10}$ α -olefin different to propylene,

(b) the polypropylene composition (PP-C) has a melt flow rate $MFR_2$ (230 °C) measured according to ISO 1133 of more than 2.0 g/10min,
and
(c) the melt flow rate $MFR_2$ (230 °C) of the polypropylene composition (PP-C) is different to the melt flow rate $MFR_2$ (230 °C) of the first polypropylene fraction (PP-1),
wherein further
in the first reactor (R-1) and second reactor (R-2) the polymerization takes place in the presence of a solid catalyst system (SCS), said solid catalyst system (SCS)
(d) has a porosity of less than 1.40 m1/g measured according to ASTM 4641 and/or a surface area of lower than 25 $m^2$/g measured according to ASTM D 3663,

(e) comprises a catalyst being the organo-zirconium compound of formula (I)

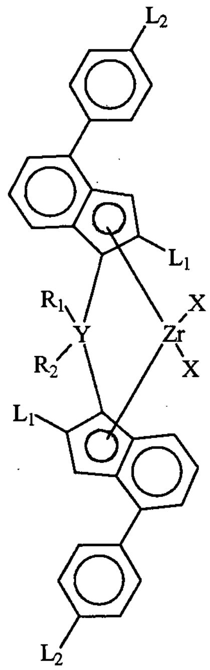

wherein

X are ligands with a σ-bond to the zirconium (Zr),

$L_1$ are identical residues selected from the group consisting of linear $C_1$ to $C_{20}$ alkyl, branched $C_3$ to $C_{20}$ alkyl, linear $C_1$ to $C_{20}$ alkenyl, branched $C_4$ to $C_{20}$ alkenyl, $C_4$ to $C_{12}$ cycloalkyl, $C_1$ to $C_{20}$ alkyl substituted $C_5$ to $C_{20}$ cycloalkyl,

$L_2$ $C_6$ to $C_{20}$ aryl, and $C_5$ to $C_{20}$ cycloalkyl substituted $C_1$ to $C_{20}$ alkyl wherein the cycloalkyl residue is substituted by $C_1$ to $C_{20}$ alkyl, are identical residues selected from the group consisting of linear $C_4$ to $C_{20}$ alkyl, branched $C_3$ to $C_{20}$ alkyl, linear $C_1$ to $C_{20}$ alkenyl, branched $C_4$ to $C_{20}$ alkenyl, $C_4$ to $C_{12}$ cycloalkyl, $C_1$ to $C_{20}$ alkyl substituted $C_5$ to $C_{20}$ cycloalkyl, and $C_6$ to $C_{20}$ aryl,

Y is C, Si or Ge, preferably Si,

$R_1$ is $C_1$ to $C_{20}$ alkyl, $C_4$ to $C_{10}$ cycloalkyl, $C_6$-$C_{12}$ aryl, $C_7$-$C_{12}$ arylalkyl, or trimethylsilyl,

$R_2$ is $C_1$ to $C_{20}$ alkyl, $C_4$ to $C_{10}$ cycloalkyl, $C_6$-$C_{12}$ aryl, $C_7$-$C_{12}$ arylalkyl, or trimethylsilyl,

and
(f) comprises a cocatalyst (Co) comprising an element (E) of group 13 of the periodic table (IUPAC).

With the above defined process it is possible to produce very clean polypropylene, i.e. polypropylene essentially free of undesired residues, and being additionally featured by excellent stiffness and high temperature resistance.
In the following the invention is described in more detail.
The term "sequential polymerization process" indicates that the polypropylene is produced in at least two reactors connected in series. Accordingly the present process comprises at least a first reactor (R-1) and a second reactor (R-2). In one specific embodiment the instant process consists of two the polymerization reactors (R-1) and (R-2). In another preferred embodiment the instant process comprises at least three polymerization reactors., i.e. after the second reactor (R-2) follows at least a third reactor (R-3). The term "polymerization reactor" shall indicate that the main polymerization takes place. Thus in case the process consists of two polymerization reactors, this definition does not exclude the option that the overall process comprises for instance a pre-polymerization step in a pre-polymerization

reactor. The term "consists of' is only a closing formulation in view of the main polymerization reactors.

By "direct feed" according to this invention is meant a process wherein the content of the first reactor (R-1), like the slurry reactor (SR), namely the polymerization product and reaction medium, is led directly to the next stage, i.e. the second reactor (R-2), like the first gas phase reactor (GPR-1).

By "indirect feed" according to this invention is meant a process wherein the content of the first reactor (R-1), like the slurry reactor (SR), is fed into the second reactor (R-2), like the first gas phase reactor (GPR-1), namely the polymerization product via a reaction medium separation unit and the reaction medium as a gas from the separation unit. Before the reaction medium is entered into second reactor (R-2), like the first gas phase reactor (GPR-1), some component, e. g. hydrogen, can be fully or partially removed there from with various technical means, as known in the art, such as membranes.

"Separation unit" means a unit operation wherein some light components, e. g. hydrogen and/or optionally nitrogen, can be separated from monomer (s) fully or partially with various technical means such as membranes, distillation, stripping or vent condensing.

The expressions "essentially without monomer recycling" and "with minimum or no monomer recycling" are synonymously used to indicate that less than 30 wt-%, preferably less than 20 wt-%, more preferably less than 10 wt-%, in particular 0 wt-% of the monomers of the first reactor (R-1), like the slurry reactor (SR), feed are recycled to first reactor (R-1). By contrast, in conventional processes normally 50 wt-% or more of the first reactor feed is recycled back to the same.

In a preferred embodiment there is no recycling of monomer(s) from the second rector (R-2) back to the first reactor (R-1). Accordingly the content of the first reactor (R-1) is directly or indirectly fed to the second reactor (R-2). Preferably a direct feed is applied.

In the direct feed process the content of the first reactor (R-1), the polymerization product and reaction medium, is conducted directly to the second reactor (R-2). The product outlet from the first reactor (R-1) can be discontinuous, or preferably continuous. The whole content of the first reactor (R-1) is led to the second reactor (R-2) as such without separation of any gases or particle streams based on different particle size. No particles are returned to the first reactor (R-1).

In the indirect feed to the second reactor (R-2) the content of the first reactor (R-1) is led first into a reaction medium separation unit. The polymer is conducted into the second reactor (R-2) from said separation unit. The off gas from the separation unit is lead into the second reactor (R-2) in gaseous form. However, before entering the gas phase the off gas is fully or partially freed from, e. g. hydrogen, with various technical solutions, e. g. membranes or stripping. Alternatively the off gas can be condensed, and optionally hydrogen or other light components can be removed before the liquid monomer is fed into the second reactor (R-2).

The reaction is continued in second reactor (R-2) and optionally in (a) further subsequent reactor(s). Thus monomer entering the second reactor (R-2) from the first reactor (R-1) might also converted into the polymer.

The first reactor (R-1) is preferably a slurry reactor (SR) and can be can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

The second reactor (R-2) and any subsequent reactor are preferably gas phase reactors (GPR). Such gas phase reactors (GPR) can be any mechanically mixed or fluid bed reactors. Preferably the gas phase reactor s (GPR) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor (R-1) is a slurry reactor (SR), like loop reactor (LR), whereas the second reactor (R-2) and — if present - any subsequent reactor is a gas phase reactor (GPR). Accordingly in one embodiment for the instant process two polymerization reactors, namely a slurry reactor (SR), like loop reactor (LR), and a first gas phase reactor (GPR-1) connected in series are used. Alternatively for the instant process three or four polymerization reactors, namely a slurry reactor (SR), like loop reactor (LR), and a first gas phase reactor (GPR-1), a second gas phase reactor (GPR-2) and optionally a fourth gas phase reactor (GPR-3) connected in series are used. If needed prior to the slurry reactor (SR) a pre-polymerization reactor is placed in each of the above stated arrangements.

As stated above the present invention is directed to a process for the preparation of a polypropylene. The polypropylene produced can be a propylene homopolymer, a random propylene copolymer or a heterophasic propylene copolymer. A heterophasic propylene copolymer according to this invention comprises a matrix and dispersed therein an elastomeric copolymer. The matrix of the heterophasic propylene copolymer can be either a propylene homopolymer or a random propylene copolymer. In any case, the polypropylene composition (PP-C) obtained due to the polymerization in the second reactor (R-2) is a random propylene copolymer or a propylene homopolymer, the latter being preferred. Accordingly, in case the instant polymerization is continued in a third reactor (R-3), like a second gas phase reactor (GPR-2), and optionally in a fourth reactor (R-4), like a third gas phase reactor (GPR-3), the final polypropylene, depending on the polymer produced in the third reactor (R-3) and optionally fourth reactor (R-4), a propylene homopolymer, random

propylene copolymer or heterophasic propylene copolymer is obtainable, i.e. obtained. However it is appreciated that the final polypropylene is the polypropylene composition (PP-C) as defined in the instant invention and obtained in the second reactor (R-2).

The expression homopolymer used in the instant invention relates to a polypropylene that consists substantially, i.e. of at least 99 wt.-%, preferably of at least 99.5 wt.-%, more preferably of at least 99.8 wt.-%, of propylene units. In a preferred embodiment only propylene units in the propylene homopolymer are detectable. The comonomer content can be determined with FT infrared spectroscopy, as described below in the examples.

As stated above the propylene copolymer can be either a random propylene copolymer or a heterophasic propylene copolymer. The term "random copolymer" has to be preferably understood according to IUPAC, i.e. as a polymer in which the probability of finding a given monomeric unit at any given site in the polymer chain is independent.

Different to the random propylene copolymer, the heterophasic propylene copolymer is featured by a matrix phase in which an elastomeric phase is dispersed. The elastomeric phase is featured by rather high xylene cold soluble content and/or being amorphous. The elastomeric phase is produced in the third reactor (R-3) (second gas phase reactor (GPR-2)) and/or fourth reactor (R-4) (third gas phase reactor (GPR-3)). Different thereto the matrix is the polypropylene composition (PP-C) as defined in the instant invention and is produced in the first reactor (R-1) and second reactor (R-2). Thus in a preferred embodiment the xylene cold soluble content of the matrix is not more than 15 wt.-%, like not more than 8 wt.-%, whereas the xylene soluble content of the elastomeric phase is at least 20 wt.-%, more preferably at least 25 wt.-%. Further the matrix can be either a propylene homopolymer or a random propylene copolymer. Concerning the preferred embodiments of the matrix, i.e. the polypropylene composition (PP-C) it is referred to the information provided below.

One essential requirement of the instant invention is that the polypropylene composition (PP-C) has specific properties. Accordingly it is required that the polypropylene composition (PP-C) has a rather high melt flow rate (MFR). The melt flow rate measured under a load of 2.16 kg at 230 °C (ISO 1133) is denoted as $MFR_2$ (230 °C). Accordingly, it is preferred that in the present invention the polypropylene composition (PP-C) has an $MFR_2$ (230 °C) of more than 2.0 g/10min, more preferably of more than 3.0 g/10min. Accordingly it is appreciated that the $MFR_2$ (230 °C) measured according to ISO 1133 is in the range of 2.0 to 10.0 g/10min, more preferably in the range of 2.0 to 6.0 g/10min, like in the range of 2.0 to 4.0 g/10min, still more preferably in the range of 2.0 to 6.0 g/10min.

As mentioned above the polypropylene composition (PP-C) can be either a propylene copolymer or a propylene homopolymer, the latter being preferred. Essential aspect of the invention is that the polypropylene composition (PP-C) comprises, preferably consists of, two different polypropylene fractions, namely a first polypropylene fraction (PP-1) and a second polypropylene fraction (PP-2). The first polypropylene fraction (PP-1) has to be produced in the first reactor (R-1), preferably slurry reactor (SR), like loop reactor (LR), whereas the second polypropylene fraction (PP-2) has to be produced in the second reactor (R-2), preferably in a (first) gas phase reactor (GPR-1). The two fractions must be produced in such a manner that the polypropylene composition (PP-C), being the intimate mixture of the first polypropylene fraction (PP-1) and the second polypropylene fraction (PP-2), has a melt flow rate (MFR) as indicated above. Another mandatory requirement is that the first polypropylene fraction (PP-1) has a melt flow rate $MFR_2$ (230 °C) measured according to ISO 1133 of

(i) not more than 1.5 g/10min, preferably of not more than 1.3 g/10min, more preferably in the range of 0.3 to 1.5 g/10min, yet more preferably in the range of 0.5 to 1.3 g/10min,
or
(ii) of more than 2.0 g/10min, preferably of more than 3.5 g/10min, more preferably of more than 2.0 to 50 g/10min, yet more preferably of more than 3.5 to 35.0 g/10min.

In case the first polypropylene fraction (PP-1) has melt flow rate $MFR_2$ (230 °C) above 2.0 g/10min a further requirement is that the melt flow rate $MFR_2$ (230 °C) of the first polypropylene fraction (PP-1) differs from the melt flow rate $MFR_2$ (230 °C) of the polypropylene composition (PP-C).

Accordingly the polypropylene composition (PP-C) is at least bimodal in its molecular weight distribution.

The expression "multimodal" or "bimodal" used herein refers to the modality of the polymer, i. e.

■ the form of its molecular weight distribution curve, which is the graph of the molecular weight fraction as a function of its molecular weight,
or
■ the form of its comonomer content distribution curve, which is the graph of the comonomer content as a function of the molecular weight of the polymer fractions.

Accordingly it is appreciated that the ratio of the melt flow rates $MFR_2$ (230 °C) between the polypropylene fraction (PP-1) and the polypropylene composition (PP-C) is at least 1.25 [$MFR_2$ (230 °C) PP-1 / $MFR_2$ (230 °C) PP-C],

more preferably it as least 1.5, like it as least 2.5, in cases the first polypropylene fraction (PP-1) has melt flow rate $MFR_2$ (230 °C) above 2.0 g/10min.

On the other hand in case, which is the preferred one, the polypropylene fraction (PP-1) has a melt flow rate $MFR_2$ (230 °C) of equal or below 1.3 g/10min, it is appreciated that the ratio of the melt flow rates $MFR_2$ (230 °C) between the polypropylene composition (PP-C) and the polypropylene fraction (PP-1) is at least 1.6 [$MFR_2$ (230 °C) PP-C / $MFR_2$ (230 °C) PP-1], more preferably it as least 2.0, like it as least 3.0.

Of course the melt flow rate $MFR_2$ (230 °C) of the polypropylene composition (PP-C) produced in the first reactor (R-1) and second reactor (R-2), is also very dependent on the weight split produced in the two reactors. It has been in particular discovered that the weight ratio between the first reactor (R-1) and the second reactor (R-1) [kg R-1/kg R-2] must be equal or below 1.5 [kg/kg], more preferably equal or below 1.2 [kg/kg], yet more preferably in the range of 0.1 to 1.5 [kg/kg], still more preferably in the range of 0.3 to 1.3 [kg/kg], still yet more preferably in the range of 0.4 to 1.1 [kg/kg], like in the range of 0.5 to 1.0 [kg/kg].

In the first reactor (R-1) can be produced a random propylene copolymer or a propylene homopolymer as the first propylene fraction (PP-1), the latter being preferred.

In case the polypropylene fraction (PP-1) is a random propylene copolymer it comprises monomers copolymerizable with propylene, for example comonomers such as ethylene and/or $C_4$ to $C_{20}$ alpha-olefins, in particular ethylene and/or $C_4$ to $C_{10}$ alpha-olefins, e.g. 1-butene and/or 1-hexene. Preferably the random propylene copolymer as the first polypropylene fraction (PP-1) comprises, especially consist of, monomers copolymerizable with propylene from the group consisting of ethylene, 1-butene and 1-hexene. More specifically the random propylene copolymer comprises - apart from propylene - units derivable from ethylene and/or 1-butene. In a preferred embodiment the random propylene copolymer as the first polypropylene fraction (PP-1) comprises units derivable from ethylene and propylene only. The comonomer content in the first polypropylene fraction (PP-1) being a random propylene copolymer is preferably relatively low, i.e. up to 6.0 wt.-%, more preferably 0.5 to 6.0 wt.-%, still more preferably 0.5 to 4.0 wt.-%, yet more preferably 0.5 to 2.0 wt.-%.

Also in the second reactor (R-1) a propylene random copolymer or a propylene homopolymer can be produced. Accordingly the obtained polypropylene composition (PP-C) in the second reactor (R-2) can be a propylene homopolymer or a random propylene copolymer. Concerning the definition of the random propylene copolymer (possible comonomers and amounts thereof) it is referred to the previous paragraph.

In case the polypropylene composition (PP-C) is a propylene homopolymer the two polypropylene fractions, PP-1 and PP-2, must be necessarily also propylene homopolymers. Accordingly the first polypropylene fraction (PP-1) and the second polypropylene fraction (PP-2) differ only in their melt flow rates but not in the comonomer content (as there are no comonomers present).

In case the polypropylene composition (PP-C) is a random propylene copolymer three different options are given:

(a) In the first reactor (R-1) and the second reactor (R-2) a random propylene copolymer is produced. Accordingly the first polypropylene fraction (PP-1) and the second polypropylene fraction (PP-2) differ in their melt flow rates and optionally also in the comonomer content.

(b) In the first reactor (R-1) a random propylene copolymer is produced and in the second reactor (R-2) a propylene homopolymer. Accordingly the first polypropylene fraction (PP-1) and the second polypropylene fraction (PP-2) differ in their melt flow rates and also in the comonomer content.

(c) In the first reactor (R-1) a propylene homopolymer is produced and in the second reactor (R-2) a random propylene copolymer. Accordingly the first polypropylene fraction (PP-1) and the second polypropylene fraction (PP-2) differ in their melt flow rates and also in the comonomer content.

The preferred way of producing the polypropylene composition (PP-C) being a propylene copolymer is that the comonomer content in the second reactor (R-2) is higher compared to the first reactor (R-1). Accordingly in the first reactor (R-1) a propylene homopolymer is produced whereas in the second reactor (R-2) a random propylene copolymer (option (c)), or both in the first reactor (R-1) and the second reactor (R-2) a random propylene polymer is produced with different comonomer contents.

However it is especially preferred that the polypropylene composition (PP-C) is a propylene homopolymer.

Further it is appreciated that the polypropylene composition (PP-C) (and consequently also its polypropylene fractions PP-1 and PP-2) is of linear structure and thus does not show (or nearby does not show) a kind of branching. Accordingly it is appreciated that the polypropylene composition (PP-C) and/or the polypropylene fraction (PP-1) of the instant invention has/have preferably a branching index g' of not less than 0.90, preferably more than 0.90, like at least 0.95. In other words if the polypropylene composition (PP-C) and/or the polypropylene fraction (PP-1) has/have some kind of branching it shall be rather moderate. Accordingly the branching index g' of the polypropylene composition (PP-C) and/or of the polypropylene fraction (PP-1) is preferably in the range of 0.90 to 1.00, more preferably in the range of more than 0.90 to below 1.00, like in the range of 0.96 to below 1.00. The branching index g' is defined as $g'=[IV]_{br}/[IV]_{lin}$

in which g' is the branching index, $[IV_{br}]$ is the intrinsic viscosity of the branched polypropylene and $[IV]_{lin}$, is the intrinsic viscosity of the linear polypropylene having the same weight average molecular weight (within a range of ± 3%) as the branched polypropylene. Thereby, a low g'-value is an indicator for a high branched polymer. In other words, if the g'-value decreases, the branching of the polypropylene increases. The exact determination of the g'-value is specified in the example section.

As will be described in detail below the in the instant process a specific single-site catalyst system is used. Accordingly the polypropylene fraction (PP-1) obtained in the first reactor (R-1) and/or the polypropylene composition (PP-C) obtained in the second reactor (R-2) has/have been not produced by a Ziegler-Natta catalyst. Thus it is further preferred that the titanium (Ti) residue content within polypropylene composition (PP-C) is preferably below 10 ppm, even more preferred titanium (Ti) is not detectable or even 0 ppm.

Further as the catalyst used in the inventive process is not supported on any silica support, it is preferred that the silicon (Si) residue content measured according to ISO 3451-1 (1997) within the polypropylene fraction (PP-1) and/or within the polypropylene composition (PP-C) is below 10 ppm, more preferably below 5 ppm, yet more preferably below 1.2 ppm, like below 1 ppm or below 0.5 ppm. In a specific embodiment no silicon (Si) within the polypropylene fraction (PP-1) and/or within the polypropylene composition (PP-C) is detectable.

Additionally it is appreciated that a magnesium (Mg) residue content measured according to ISO 3451-1 (1997) within the polypropylene fraction (PP-1) and/or within the polypropylene composition (PP-C) is of not more than 5 ppm, preferably below 1.0 ppm, still more preferably below 0.5 ppm, yet more preferably 0 ppm or not detectable according to the applied measuring method, and/or the chlorine (Cl) residue content measured according to ISO 3451-1 (1997) is below 1.0 ppm, still more preferably below 0.5 ppm.

Due to the specific use of catalyst system the obtained polypropylene fraction (PP-1) and/or the obtained polypropylene composition (PP-C) is/are preferably further featured by a rather low xylene cold soluble (XCS) content, i.e. by a xylene cold soluble (XCS) content of not more than 1.5 wt.-%, more preferably of below 1.3 wt.-%, yet more preferably below 1.0 wt.-%, like below 0.8 wt.-%. Thus it is in particular appreciated that the polypropylene fraction (PP-1) and/or the polypropylene composition (PP-C) of the instant invention has/have a xylene cold soluble (XCS) content in the range of 0.3 to 1.5 wt.-%, more preferably in the range of 0.3 to 1.3 wt.-%, yet more preferably in the range of 0.4 to 1.0 wt.-%, like in the range of 0.4 to 0.8 wt.-%.

Additionally the obtained polypropylene fraction (PP-1) and/or the obtained polypropylene composition (PP-C) can be characterized by a rather high melting point. Accordingly it is appreciated that the polypropylene fraction (PP-1) and/or the polypropylene composition (PP-C) has/have a melting temperature ($T_m$) measured according to ISO 11357-3 of at least 151.0 °C, more preferably of at least 152 °C. Thus it is in particular appreciated that the melting temperature ($T_m$) measured according to ISO 11357-3 of the polypropylene fraction (PP-1) and/or of the polypropylene composition (PP-C) is in the range of 151 to 160 °C, more preferably in the range of 151 to 155 °C, yet more preferably in the range of 151 to 159 °C, and still more preferably in the range of 151 to 155 °C.

Moreover the polypropylene fraction (PP-1) and/or the polypropylene composition (PP-C) has/have rather high crystallization temperature ($T_c$). Thus it is preferred that the polypropylene fraction (PP-1) and/or the polypropylene composition (PP-C) has/have crystallization temperature ($T_c$) measured according to ISO 11357-3 of at least 110 °C, more preferably of at least 111 °C. Accordingly the polypropylene fraction (PP-1) and/or the polypropylene composition (PP-C) has/have preferably a crystallization temperature ($T_c$) measured according to ISO 11357-3 in the range of 110 to 120 °C, more preferably in the range of 111 to 117 °C.

The stepwise isothermal segregation technique (SIST) provides a possibility to determine the lamella thickness distribution. The precise measuring method is specified in the example section (in particular the definition of the lamella thickness of each fraction and its melt enthalpy). Thereby rather high amounts (rather high melt enthalpy [J/g]) of polymer fractions crystallizing at high temperatures indicate a rather high amount of thick lamellae. Thus it is appreciated that the polypropylene composition (PP-C) comprises at least 18.0 wt-%, more preferably at least 18.3 wt.-%, yet more preferably at least 18.6 wt.-%, still yet more preferably at least 19.0 wt.-%, of a crystalline fraction having a lamella thickness of more than 14.09 nm, wherein said fraction is determined by the stepwise isothermal segregation technique (SIST).

Additionally it is appreciated that the polypropylene composition (PP-C) comprises not more than 67.0 wt.-%, more preferably not more than 66.0 wt.-%, like not more than 65.0 wt.-%, of a crystalline fraction having a lamella thickness in the range of 7.70 to 14.09 nm. On the other hand the crystalline fraction having a lamella thickness in the range of 7.70 to 14.09 nm should be not too low. Thus it is additionally or alternatively to the upper range preferred that the polypropylene composition (PP-C) comprises more than 45 wt.-%, more preferably more than 50 wt.-%, yet more preferably more than 55 wt.-%, still yet more preferably more than 60 wt.-%, of a crystalline fraction having a lamella thickness in the range of 7.70 to 14.09 nm Thus it is appreciated that the polypropylene composition (PP-C) according to this inventive process comprises a crystalline fraction having a lamella thickness in the range of 7.70 to 14.09 nm in the amount of 45.0 to 67.0 wt.-%, more preferably in the amount of 55.0 to 67.0 wt.-%, yet more preferably in the amount of 60.0 to 66.0 wt.-%, still yet more preferably in the amount of 61.0 to 65.00 wt.-%, like in the amount of 63.0 to 65.0 wt.-%.

Further it is desired that the polypropylene composition (PP-C) comprises more than 12.0 wt.-%, more preferably more than 14.0 wt.-%, like more than 15.0 wt.-%, of a crystalline fraction having a lamella thickness in the range of 2.52 to 7.69 nm. Thus it is appreciated that the polypropylene composition (PP-C) obtained in the second reactor (R-2) of the inventive process comprises a crystalline fraction having a lamella thickness in the range of 2.52 to 7.69 nm in the amount of 12.0 to 22.0 wt.-%, more preferably in the amount of 14.0 to 20.0 wt.-%, like in the amount of 15.0 to 19.0 wt.-%.

The molecular weight distribution (MWD) is the relation between the numbers of molecules in a polymer and the individual chain length. The molecular weight distribution (MWD) is expressed as the ratio of weight average molecular weight ($M_w$) and number average molecular weight ($M_n$). The number average molecular weight ($M_n$) is an average molecular weight of a polymer expressed as the first moment of a plot of the number of molecules in each molecular weight range against the molecular weight. In effect, this is the total molecular weight of all molecules divided by the number of molecules. In turn, the weight average molecular weight ($M_w$) is the first moment of a plot of the weight of polymer in each molecular weight range against molecular weight.

The number average molecular weight ($M_n$) and the weight average molecular weight ($M_w$) as well as the molecular weight distribution (MWD) are determined by size exclusion chromatography (SEC) using Waters Alliance GPCV 2000 instrument with online viscometer. The oven temperature is 140 °C. Trichlorobenzene is used as a solvent (ISO 16014).

Accordingly it is preferred that the first polypropylene fraction (PP-1) with an $MFR_2$ (230 °C) of below 1.5 g/10min has a weight average molecular weight ($M_w$) of above 300,000 g/mol, more preferably of above 350,000, yet more preferably in the range of 350,000 to 1,200,000 g/mol, more preferably from 400,000 to 1,000,000 g/mol. On the other hand the first polypropylene fraction (PP-1) with an $MFR_2$ (230 °C) of more than 2.0 g/10min has preferably a weight average molecular weight ($M_w$) of below 300,000 g/mol, more preferably of below 280,000, yet more preferably in the range of 150,000 to below 300,000 g/mol, more preferably from 180,000 to 280,000 g/mol.

The polypropylene composition (PP-C) is preferably featured by a weight average molecular weight ($M_w$) of below 400,000 g/mol, more preferably of below 350,000, yet more preferably in the range of 150,000 to 400,000 g/mol, more preferably from 180,000 to 320,000 g/mol.

The number average molecular weight ($M_n$) of the polypropylene composition (PP-C) is preferably in the range of 5,000 to 400,000 g/mol, more preferably from 10,000 to 300,000 g/mol.

A broad molecular weight distribution (MWD) improves the processability of the polypropylene. Accordingly it is appreciated that the molecular weight distribution (MWD) measured according to ISO 16014 of the polypropylene composition (PP-C) is at least 2.8, more preferably at least 3.0, like 3.3. On the other hand a rather broad molecular weight distribution (MWD) indicates rather high amount of low molecular weight fractions which contribute to the xylene soluble content without improving for instance the dielectrical performance. Therefore, in an alternative embodiment the molecular weight distribution (MWD) of the polypropylene composition (PP-C) is preferably between 2.8 to 8.0, still more preferably in the range of 3.0 to 5.0, like 3.0 to 3.4, yet more preferably in the range of 3.3 to 3.5.

Accordingly decisive aspect of the present inventive process is the preparation of the polypropylene composition (PP-C) in the first two reactors. The polypropylene composition (PP-C) is featured by low residue content and good mechanical properties. Accordingly the polypropylene composition (PP-C) is preferably the final product of the instant process. However the polypropylene composition (PP-C) can be additionally transferred to a further third reactor (R-3) and optionally to a fourth reactor (R-4). The third reactor (R-3) and the fourth reactor (R-4) are preferably gas phase reactors (GPR). In one embodiment in these reactors an elastomeric propylene copolymer can be produced which is dispersed in the polypropylene composition (PP-C). Accordingly the instant process provides also the option for the preparation of a heterophasic propylene copolymer wherein the polypropylene composition (PP-C) constitutes the matrix and the polypropylene material produced in the third reactor (R-3) and optionally the fourth reactor (R-4) constitutes the elastomeric phase. Alternatively in the third reactor (R-3) and optionally in a fourth reactor (R-4), both being preferably gas phase reactors (GPRs) a propylene random copolymer or a propylene homopolymer can be produced, the latter especially preferred. Thus in one embodiment the inventive process comprises three reactors, a slurry reactor (SR), like a loop reactor (LR), and two gas phase reactors in which homopolymers are produced.

The condition (temperature, pressure, reaction time, monomer feed) in each reactor is dependent on the desired product which is in the knowledge of a person skilled in the art. As already indicated above, the first reactor (R-1) is preferably a slurry reactor (SR), like a loop reactor (LR), whereas the second reactor (R-2) is preferably a gas phase reactor (GPR-1). The subsequent reactors — if present — are also preferably gas phase reactors (GPR).

A preferred multistage process is a "loop-gas phase"-process, such as developed by Borealis A/S, Denmark (known as BORSTAR® technology) described e.g. in patent literature, such as in EP 0 887 379 or in WO 92/12182.

Multimodal polymers can be produced according to several processes which are described, e.g. in WO 92/12182, EP 0 887 379, and WO 98/58976.

Preferably, in the instant process for producing polypropylene polymer as defined above the conditions for the first reactor (R-1), i.e. the slurry reactor (SR), like a loop reactor (LR), of step (A) may be as follows:

- the temperature is within the range of 40 °C to 110°C, preferably between 60 °C and 100 °C, 70 to 90 °C,
- the pressure is within the range of 20 bar to 80 bar, preferably between 40 bar to 70 bar,
- hydrogen can be added for controlling the molar mass in a manner known per se.

Subsequently, the reaction mixture from step (A) is transferred to the second reactor (R-2), i.e. gas phase reactor (GPR-1), i.e. to step (C), whereby the conditions in step (C) are preferably as follows:

- the temperature is within the range of 50 °C to 130 °C, preferably between 60 °C and 100 °C,
- the pressure is within the range of 5 bar to 50 bar, preferably between 15 bar to 40 bar,
- hydrogen can be added for controlling the molar mass in a manner known per se. The residence time can vary in both reactor zones.

In one embodiment of the process for producing the polypropylene the residence time in bulk reactor, e.g. loop is in the range 0.2 to 4 hours, e.g. 0.3 to 1.5 hours and the residence time in gas phase reactor will generally be 0.2 to 6.0 hours, like 0.5 to 4.0 hours.

If desired, the polymerization may be effected in a known manner under supercritical conditions in the first reactor (R-1), i.e. in the slurry reactor (SR), like in the loop reactor (LR), and/or as a condensed mode in the gas phase reactor (GPR-1).

The conditions in the other gas phase reactors (GPR), if present, are similar to the second reactor (R-2).

Especially good results are achievable by the present process in case as specific pre-polymerization is used prior to the polymerization in the first reactor (R-1). The pre-polymerization can be conducted in the first reactor (R-1), however it is preferred that the pre-polymerization takes place in a separate reactor, so called pre-polymerization reactor.

Preferably, prior to the polymerization in the first reactor (R-1) a pre-polymerization step is carried out in which the solid catalyst system is pre-polymerized with propylene.

As already indicated with the instant process the polypropylene composition (PP-C) is obtained. This polypropylene composition (PP-C) is very suitable for capacitor films due to its low residue content.

Further it is appreciated that the pre-polymerization temperature is rather low, i.e. between 10 to 50 °C, yet more preferably between 12 to 45 °C, like between 15 to 42 °C.

The pressure can be between 40 to 80 bar, preferably between 45 to 75 bar, like 48 to 70 bar. Residence times can vary between 0.1 to 1.0 hours, like between 0.2 and 0.6 hours. All hydrogen can be fed via pre-polymerization when capacitor grades are produced.

As indicated above a further essential aspect in the instant process is the used solid catalyst system (SCS). Accordingly the present invention requires a solid catalyst system (SCS) having a porosity measured according ASTM 4641 of less than 1.40 ml/g and/or a surface area measured according to ASTM D 3663 of lower than 25 $m^2/g$, said solid catalyst system (SCS) comprises

(a) a catalyst being the organo-zirconium compound of formula (I)

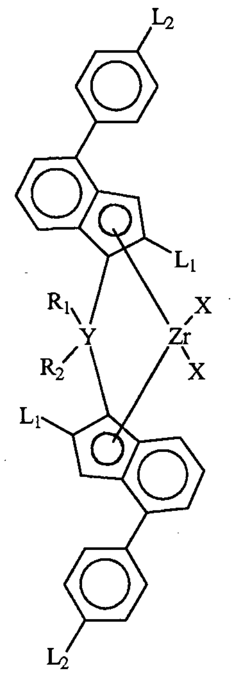

wherein

X are ligands with a δ-bond to the zirconium (Zr),

$L_1$ are identical residues selected from the group consisting of linear $C_1$ to $C_{20}$ alkyl, branched $C_3$ to $C_{20}$ alkyl, linear $C_1$ to $C_{20}$ alkenyl, branched $C_4$ to $C_{20}$ alkenyl, $C_4$ to $C_{12}$ cycloalkyl, $C_1$ to $C_{20}$ alkyl substituted $C_5$ to $C_{20}$ cycloalkyl, $C_6$ to $C_{20}$ aryl, and $C_5$ to $C_{20}$ cycloalkyl substituted $C_1$ to $C_{20}$ alkyl wherein the cycloalkyl residue is substituted by $C_1$ to $C_{20}$ alkyl,

$L_2$ are identical residues selected from the group consisting of linear $C_1$ to $C_{20}$ alkyl, branched $C_3$ to $C_{20}$ alkyl, linear $C_1$ to $C_{20}$ alkenyl, branched $C_4$ to $C_{20}$ alkenyl, $C_4$ to $C_{12}$ cycloalkyl, $C_1$ to $C_{20}$ alkyl substituted $C_5$ to $C_{20}$ cycloalkyl, and $C_6$ to $C_{20}$ aryl,

Y is C, Si or Ge, preferably Si,

$R_1$ is $C_1$ to $C_{20}$ alkyl, $C_4$ to $C_{10}$ cycloalkyl, $C_6$-$C_{12}$ aryl, $C_7$-$C_{12}$ arylalkyl, or trimethylsilyl,

$R_2$ is $C_1$ to $C_{20}$ alkyl, $C_4$ to $C_{10}$ cycloalkyl, $C_6$-$C_{12}$ aryl, $C_7$-$C_{12}$ arylalkyl, or trimethylsilyl,

and

(b) a cocatalyst (Co) comprising an element (E) of group 13 of the periodic table (IUPAC).

Preferably the residues "$R_1$" and "$R_2$" are chemically different.

Furthermore it is preferred, that the solid catalyst system (SCS) has a surface area of lower than 15 $m^2/g$, yet still lower than 10$m^2/g$ and most preferred lower than 5 $m^2/g$, which is the lowest measurement limit. The surface area according to this invention is measured according to ASTM D 3663 ($N_2$).

Additionally it is appreciated that the solid catalyst system (SCS) has a porosity of less than 1.30 ml/g and more preferably less than 1.00 ml/g. The porosity has been measured according to ASTM 4641 ($N_2$). In another preferred embodiment the porosity is not detectable when determined with the method applied according to ASTM 4641 ($N_2$).

It is in particular preferred that the porosity is not detectable when applying the method according to ASTM 4641 ($N_2$) and has a surface area measured according to ASTM D 3663 ($N_2$) of less than 5 $m^2/g$ (i.e. below the detection limit).

Further the solid catalyst system (SCS) typically has a mean particle size of not more than 500 μm, i.e. preferably in the range of 2 to 500 μm, more preferably 5 to 200 μm. It is in particular preferred that the mean particle size is below 80 μm, still more preferably below 70 μm. A preferred range for the mean particle size is 5 to 70 μm, or even 10 to 60 μm.

The term "δ-ligand" is understood in the whole description in a known manner, i.e. a group bonded to the metal at one or more places via a sigma bond. Thus the ligands "X" can independently be selected from the group consisting of hydrogen, halogen, $C_1$ to $C_{20}$ alkyl, $C_1$ to $C_{20}$ alkoxy, $C_2$ to $C_{20}$ alkenyl, $C_2$ to $C_{20}$ alkynyl, $C_3$ to $C_{12}$ cycloalkyl, $C_6$ to

$C_{20}$ aryl, $C_6$ to $C_{20}$ aryloxy, $C_7$ to $C_{20}$ arylalkyl, $C_7$ to $C_{20}$ arylalkenyl, -SR", -PR"$_3$, -SiR"$_3$, -OSiR"$_3$ and - NR"$_2$, wherein each R" is independently hydrogen, $C_1$ to $C_{20}$ alkyl, $C_2$ to $C_{20}$ alkenyl, $C_2$ to $C_{20}$ alkynyl, $C_3$ to $C_{12}$ cycloalkyl or $C_6$ to $C_{20}$ aryl. In a preferred embodiments the ligands "X" are identical and either halogen, like Cl, or benzyl.

In a preferred embodiment the ligands "X" are those as defined in claim 2.

A preferred monovalent anionic ligand is halogen, in particular chlorine (Cl).

The residues "$L_1$" and "$L_2$" must be on both indenyl residues the same.

Preferably the residues "$L_1$" are selected from the group consisting of linear $C_1$ to $C_{20}$ alkyl, branched $C_3$ to $C_{20}$ alkyl, $C_1$ to $C_{20}$ alkyl substituted $C_5$ to $C_{20}$ cycloalkyl, and $C_5$ to $C_{20}$ cycloalkyl substituted $C_1$ to $C_{20}$ alkyl wherein the cycloalkyl residue is substituted by $C_1$to $C_{20}$ alkyl. More preferably the residues "$L_1$" are selected from the group consisting of methyl, ethyl, n-propyl, iso-propyl, n-butyl, tert-butyl, cyclohexyl, methyl-(methyl-cyclohexyl).

Preferably the residues "$L_2$" are selected from the group consisting of linear $C_1$ to $C_{20}$ alkyl, branched $C_3$ to $C_{20}$ alkyl, $C_4$ to $C_{12}$ cycloalkyl, $C_1$ to $C_{20}$ alkyl substituted $C_5$ to $C_{20}$ cycloalkyl, and $C_6$ to $C_{20}$ aryl. More preferably the residues "$L_2$" are selected from the group consisting of methyl, ethyl, n-propyl, iso-propyl, n-butyl, tert-butyl, cyclohexyl, and phenyl. Especially preferred residues "$L_2$" are linear $C_1$ to $C_{20}$ alkyl or branched $C_3$ to $C_{20}$ alkyl, like - $C(CH_3)_3$.

Concerning the linking group "—Y($R_1$)($R_2$)—" of formula (I)
it is preferred that
Y is Si and
$R_1$ and $R_2$ are independently from each other selected from the group consisting of $C_1$ to $C_{10}$ alkyl, $C_4$ to $C_{10}$ cycloalkyl, and $C_6$-$C_{12}$ aryl.

Even more preferred
Y is Si and
$R_1$and $R_2$ are selected from the group consisting of $C_1$ to $C_{10}$ alkyl, $C_4$ to $C_{10}$ cycloalkyl, and $C_6$-$C_{12}$ aryl,
with the proviso that $R_1$ and $R_2$ are chemically different.

In a preferred embodiment an organo-zirconium compound is used as defined in claim 3.

Accordingly in a specific embodiment the catalyst is rac-methyl(cyclohexyl)silanediyl bis(2-methyl-4-(4-tert-butylphenyl)indenyl)zirconium dichloride.

More preferred the catalyst of the present invention is not supported on any external inorganic or organic support, like silica, alumina or porous polymeric support material.

As a further requirement the solid catalyst system (SCS) according to this invention must comprise a cocatalyst (Co) comprising an element (E) of group 13 of the periodic table (IUPAC), for instance the cocatalyst (Co) comprises a compound of Al.

Examples of such cocatalyst (Co) are organo aluminium compounds, such as trialkylaluminium compound and/or aluminoxane compound or mixtures thereof.

Such compounds of Al, preferably aluminoxanes, can be used as the only compound in the cocatalyst (Co) or together with other cocatalyst compound(s). Thus besides or in addition to the compounds of Al, i.e. the aluminoxanes, other cation complex forming cocatalyst compounds, like boron compounds can be used. Said cocatalysts are commercially available or can be prepared according to the prior art literature. Preferably however in the manufacture of the solid catalyst system only compounds of Al as cocatalyst (Co) are employed.

In particular preferred cocatalysts (Co) are the aluminoxanes, in particular the Cl to C10-alkylaluminoxanes, most particularly methylaluminoxane (MAO).

Especially good results are achievable in case the mol ratio of element (E) of the cocatalyst (Co) and zirconium, preferably the mol ratio of Al of the cocatalyst (Co) and zirconium, are kept in a specific ratio. Accordingly it is appreciated that mol ratio of element (E) of the cocatalyst (Co) and zirconium [E/Zr], preferably the mol ratio of Al of the cocatalyst (Co) (like aluminoxanes, such as methylaluminumoxane (MAO)) and zirconium [Al/Zr], is in a range of 100 to 800 mol/mol, more preferably in a range of 150 to 600 mol/mol, yet more preferably in a range of 200 to 400 mol/mol, like 200 to 350mol/mol.

Preferably, the organo-zirconium compound of formula (I) and the cocatalyst (Co) of the solid catalyst system (SCS) represent at least 70 wt%, more preferably at least 80 wt%, even more preferably at least 90 wt%, even further preferably at least 95 wt% of the solid catalyst system. Thus it is appreciated that the solid catalyst system is featured by the fact that it is self-supported, i.e. it does not comprise any catalytically inert support material, like for instance silica, alumina or $MgCl_2$ or porous polymeric material, which is otherwise commonly used in heterogeneous catalyst systems, i.e. the catalyst is not supported on external support or carrier material. As a consequence of that the solid catalyst system (SCS) is self-supported and it has a rather low surface area.

The solid metallocene catalyst system (SCS) is preferably obtained by the emulsion solidification technology, the basic principles of which are described in WO 03/051934.

Hence the solid catalyst system (SCS) is preferably in the form of solid catalyst particles, obtainable by a process comprising the steps of

a) preparing a solution of one or more catalyst components;

b) dispersing said solution in a second solvent to form an emulsion in which said one or more catalyst components are present in the droplets of the dispersed phase,

c) solidifying said dispersed phase to convert said droplets to solid particles and optionally recovering said particles to obtain said catalyst.

Preferably a first solvent, more preferably a first organic solvent, is used to form said solution. Still more preferably the organic solvent is selected from the group consisting of a linear alkane, cyclic alkane, aromatic hydrocarbon and halogen-containing hydrocarbon.

Moreover the second solvent forming the continuous phase is an inert solvent towards to catalyst components, The second solvent might be immiscible towards the solution of the catalyst components at least under the conditions (like temperature) during the dispersing step. The term "immiscible with the catalyst solution" means that the second solvent (continuous phase) is fully immiscible or partly immiscible i.e. not fully miscible with the dispersed phase solution.

Preferably the immiscible solvent comprises a fluorinated organic solvent and/or a functionalized derivative thereof, still more preferably the immiscible solvent comprises a semi-, highly- or perfluorinated hydrocarbon and/or a functionalized derivative thereof. It is in particular preferred, that said immiscible solvent comprises a perfluorohydrocarbon or a functionalized derivative thereof, preferably $C_3$-$C_{30}$ perfluoroalkanes, -alkenes or - cycloalkanes, more preferred $C_4$-$C_{10}$ perfluoro-alkanes, -alkenes or -cycloalkanes, particularly preferred perfluorohexane, perfluoroheptane, perfluorooctane or perfluoro (methylcyclohexane) or perfluoro (1,3- dimethylcyclohexane) or a mixture thereof. Furthermore it is preferred that the emulsion comprising said continuous phase and said dispersed phase is a bi-or multiphasic system as known in the art. An emulsifier may be used for forming and stabilising the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst. The emulsifying agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated Cl-n (suitably C4-30-or C5-15) alcohol (e.g. highly fluorinated heptanol, octanol or nonanol), oxide (e.g. propenoxide) or acrylate ester which reacts e.g. with a cocatalyst component, such as aluminoxane to form the "actual" surfactant.

In principle any solidification method can be used for forming the solid particles from the dispersed droplets. According to one preferable embodiment the solidification is effected by a temperature change treatment. Hence the emulsion subjected to gradual temperature change of up to 10°C/min, preferably 0.5 to 6 °C/min and more preferably 1 to 5 °C/min. Even more preferred the emulsion is subjected to a temperature change of more than 40 °C, preferably more than 50 °C within less than 10 seconds, preferably less than 6 seconds.

The recovered particles have preferably an average size range of 5 to 200 μm, more preferably 10 to 100 μm.

Moreover, the form of solidified particles have preferably a spherical shape, a predetermined particles size distribution and a surface area as mentioned above of preferably less than 25 $m^2/g$, still more preferably less than 20 $m^2/g$, yet more preferably less than 15 $m^2/g$, yet still more preferably less than 10$m^2/g$ and most preferably less than 5 $m^2/g$, wherein said particles are obtained by the process as described above.

For further details, embodiments and examples of the continuous and dispersed phase system, emulsion formation method, emulsifying agent and solidification methods reference is made e.g. to the above cited international patent application WO 03/051934.

All or part of the preparation steps can be done in a continuous manner. Reference is made to W02006/069733 describing principles of such a continuous or semicontinuous preparation methods of the solid catalyst types, prepared via emulsion/solidification method.

The above described catalyst components are prepared according to the methods described in WO 01/48034.

The instant process enables very feasible means for obtaining the reactor-made polypropylene composition (PP-C) as defined above. This polypropylene composition (PP-C) is very suitable capacitor grade. Accordingly a capacitor film can be prepared by conventional drawing processes known in the art using the polypropylene composition (PP-C). The process for the manufacture of a capacitor film according to this invention comprises the use of polypropylene composition (PP-C) as defined herein and its forming into a film preferably by the tenter method known in the art.

The tenter method is in particular a method in which the polypropylene composition (PP-C) is melt extruded from a slit die such as a T-die and cooled on a cooling drum obtaining an undrawn sheet. Said sheet is pre-heated for example with a heated metal roll and then drawn in the length direction between a plurality of rolls over which a difference in peripheral speeds is established and then both edges are gripped with grippers and the sheet is drawn in the transverse direction in an oven by means of a tenter resulting in a biaxially drawn film. The temperature of said stretched sheet

during the longitudinal drawing is preferably controlled in such a way as to be within the temperature range of the melting point of the polypropylene as defined herein (- 15 or + 5°C). The uniformity of the film thickness on transverse drawing can be evaluated with the method in which a fixed region on the film is masked after drawing in the length direction and measuring the actual drawing factor by measuring the spacing of the said masking after transverse drawing.

Subsequently, the film can be treated by corona discharge in air, nitrogen, carbon dioxide gas or any of the mixtures on the surface to be metallized, to improve the adhesive strength to the metal to be deposited, and wound by a winder.

The obtained film can set in a vacuum metallizer, and the film is preferably coated with an oil to form an insulation groove suitable for the purpose concerned, using a gravure coater, etc. Then, the metal suitable for the purpose concerned is deposited to achieve a predetermined layer resistance. Furthermore, as required, metallization is carried out through a comb-shaped deposition preventive plate to continuously change the resistance value in the transverse direction of the film. The metallized film is slit, to make two metallized reels as a pair for making a capacitor device. Then, the reels are wound to form a device and the device is formed to be flat by a thermal press, being followed by metal spraying at the ends, attaching of leads, as required impregnation with an insulating oil, and packaging to make a capacitor.

The present invention will now be described in further detail by the following examples.

## EXAMPLES

### A. Measuring methods

The following definitions of terms and determination methods apply for the above general description of the invention as well as to the below examples unless otherwise defined.

**NMR-spectroscopy measurements:**

The $^{13}C$-NMR spectra of polypropylenes were recorded on Bruker 400MHz spectrometer at 130 °C from samples dissolved in 1,2,4-trichlorobenzene/benzene-d6 (90/10 w/w). For the pentad analysis the assignment is done according to the methods described in literature: (T. Hayashi, Y. Inoue, R. Chüjö, and T. Asakura, Polymer 29 138-43 (1988).and Chujo R, et al,Polymer 35 339 (1994).

The NMR-measurement was used for determining the mmmm pentad concentration in a manner well known in the art.

**Mw, Mn, MWD**

Mw/Mn/MWD are measured by Gel Permeation Chromatography (GPC) according to the following method:

> The weight average molecular weight (Mw), the number average molecular weight (Mn), and the molecular weight distribution (MWD = Mw/Mn) is measured by a method based on ISO 16014-1:2003 and ISO 16014-4:2003. A Waters Alliance GPCV 2000 instrument, equipped with refractive index detector and online viscosimeter is used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 μL of sample solution are injected per analysis. The column set is calibrated using relative calibration with 19 narrow MWD polystyrene (PS) standards in the range of 0.5 kg/mol to 11 500 kg/mol and a set of well characterized broad polypropylene standards. All samples are prepared by dissolving 5 to 10 mg of polymer in 10mL (at 160 °C) of stabilized TCB (same as mobile phase) and keeping for 3 hours with continuous shaking prior sampling in into the GPC instrument.

Molecular weight averages, molecular weight distribution, branching index (Mn, Mw, MWD, g') determined by SEC/VISC-LS

Molecular weight averages (Mw, Mn), molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4 2003. A PL 220 (Polymer Laboratories) GPC equipped with a refractive index (RI), an online four capillary bridge viscometer (PL-BV 400-HT), and a dual light scattering detector (PL-LS 15/90 light scattering detector) with a 15° and 90° angle was used. 3x Olexis and 1x Olexis Guard columns from Polymer Laboratories as stationary phase and 1,2,4-trichlorobenzene (TCB, stabilized with 250 mg/L 2,6-Di tert butyl-4-methyl-phenol) as mobile phase at 160 °C and at a constant flow rate of 1 mL/min was applied. 200 μL of sample solution were injected per analysis. The corresponding detector constants

as well as the inter detector delay volumes were determined with a narrow PS standard (MWD = 1.01) with a molar mass of 132900 g/mol and a viscosity of 0.4789 dl/g. The corresponding dn/dc for the used PS standard in TCB is 0,053 $cm^3/g$.

The molar mass at each elution slice was determined by light scattering using a combination of two angles 15° and 90°. All data processing and calculation was performed using the Cirrus Multi-Offline SEC-Software Version 3.2 (Polymer Laboratories a Varian inc. Company). The molecular weight was calculated using the option in the Cirrus software "use combination of LS angles" in the field "sample calculation options subfield slice MW data from".

The data processing is described in details in G. Saunders, P. A. G: Cormack, S. Graham; D. C. Sherrington, Macromolecules, 2005, 38, 6418-6422. Therein the $Mw_i$ at each slice is determined by the 90° angle by the following equation:

$$Mw_i = \frac{K_{LS} * R(\theta)^{90°}}{\frac{dn}{dc} * R * P(\theta)}$$

The Rayleigh ratio $R(\theta)^{90°}$ of the 90° angle is measured by the LS detector and R is the response of the RI-detector. The particle scatter function $P(\theta)$ is determined by the usage of both angles (15° and 90°) as described by C. Jackson and H. G. Barth(C. Jackson and H. G. Barth, "Molecular Weight Sensitive Detectors" in Handbook of Size Exclusion Chromatography and related techniques, C.-S. Wu, 2nd ed., Marcel Dekker, New York, 2004, p.103). For the low and high molecular region in which less signal of the LS detector or RI detector respectively was achieved a linear fit was used to correlate the elution volume to the corresponding molecular weight.

The dn/dc used in the equation is calculated from the detector constant of the RI detector, the concentration c of the sample and the area of the detector response of the analysed sample. The relative amount of branching is determined using the g'-index of the branched polymer sample. The long chain branching (LCB) index is defined as g'= $[\eta]_{br}/[\eta]_{lin}$. It is well known if the g' value increases the branching content decreases. $[\eta]$ is the intrinsic viscosity at 160 °C in trichloorbenzene of the polymer sample at a certain molecular weight and is measured by an online viscosity and a concentration detector. The intrinsic viscosities were measured as described in the handbook of the Cirrus Multi-Offline SEC-Software Version 3.2 with use of the Solomon-Gatesman equation.

The necessary concentration of each elution slice is determined by a RI detector. $[\eta]_{lin}$ is the intrinsic viscosity of a linear sample and $[\eta]_{br}$ the viscosity of a branched sample of the same molecular weight and chemical composition. The number average of$g'_n$ and the weight average $g'_w$ are defined as:

$$g'_n = \frac{\sum_0^i a_i * \frac{[\eta]_{br,i}}{[\eta]_{lin,i}}}{\sum a_i}$$

$$g'_w = \frac{\sum_0^i A_i * \frac{[\eta]_{br,i}}{[\eta]_{lin,i}}}{\sum_0^i A_i * \left(\frac{[\eta]_{br,i}}{[\eta]_{lin,i}}\right)^2}$$

where $a_i$ is dW/dlogM of fraction i and $A_i$ is the cumulative dW/dlogM of the polymer up to fraction i. The $[\eta]_{lin}$ of the linear reference (linear isotactic PP) over the molecular weight was measured with an online viscosity detector. Following K and $\alpha$ values were obtained ($K = 30.68^{*}10^{-3}$ and $\alpha = 0.681$) from the linear reference in the molecular weight range of logM= 4.5-6.1. The $[\eta]_{lin}$ per slice molecular weight for the g' calculations was calculated by following relationship $[\eta]_{lin,i} = K{*}M_i^{\alpha}$. $[\eta]_{br,i}$ was measured for each particular sample by online viscosity and concentration detector.

**Melt Flow Rate (MFR)**

The melt flow rates are measured with a load of 2.16 kg ($MFR_2$) at 230°C. The melt flow rate is that quantity

of polymer in grams which the test apparatus standardised to ISO 1133 extrudes within 10 minutes at a temperature of 230 °C under a load of 2.16 kg.

**Comonomer content**

Comonomer content (wt%) is determined in a known manner based on Fourier transform infrared spectroscopy (FTIR) determination calibrated with $C^{13}$-NMR.

**Xylene cold soluble fraction (XCS wt%)**

The xylene cold soluble fraction (XCS) is determined at 23 °C according to ISO 6427. The gel content is assumed to be identical to the xylene hot insoluble (XHI) fraction, which is determined by extracting 1 g of finely cut polymer sample with 350 ml xylene in a Soxhlet extractor for 48 hours at the boiling temperature. The remaining solid amount is dried at 90°C and weighed for determining the insolubles amount.

Melting temperature $T_m$, crystallization temperature $T_c$, is measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.

Also the melt- and crystallization enthalpy **(Hm and He)** were measured by the DSC method according to ISO 11357-3.

**Elementary Analysis**

The below described elementary analysis is used for determining the content of elementary residues which are mainly originating from the catalyst, especially the Al-, B-, and Si-residues in the polymer. Said Al-, B- and Si-residues can be in any form, e.g. in elementary or ionic form, which can be recovered and detected from polypropylene using the below described ICP-method. The method can also be used for determining the Ti-content of the polymer. It is understood that also other known methods can be used which would result in similar results.
ICP-Spectrometry (Inductively Coupled Plasma Emission)
ICP-instrument: The instrument for determination of Al-, B- and Si-content is ICP Optima 2000 DV, PSN 620785 (supplier Perkin Elmer Instruments, Belgium) with software of the instrument.
Detection limits are 0.10 ppm (Al), 0.10 ppm (B), 0.10 ppm (Si).
The polymer sample was first ashed in a known manner, then dissolved in an appropriate acidic solvent. The dilutions of the standards for the calibration curve are dissolved in the same solvent as the sample and the concentrations chosen so that the concentration of the sample would fall within the standard calibration curve.
ppm: means parts per million by weight
Ash content: Ash content is measured according to ISO 3451-1 (1997) standard.
Calculated ash, Al- Si- and B-content:

The ash and the above listed elements, Al and/or Si and/or B can also be calculated form a polypropylene based on the polymerization activity of the catalyst as exemplified in the examples. These values would give the upper limit of the presence of said residues originating from the catalyst.

Thus the estimate catalyst residue is based on catalyst composition and polymerization productivity, catalyst residues in the polymer can be estimated according to:

Total catalyst residues [ppm] = 1 / productivity [$kg_{pp}/g_{catalyst}$] x 100
Al residues [ppm] = $W_{Al}$, catalyst [%] x total catalyst residues [ppm] / 100
Zr residues [ppm] = $W_{Zr}$, catalyst [%] x total catalyst residues [ppm] / 100
(Similar calculations apply also for B, Cl and Si residues)

Chlorine residues content: The content of Cl-residues is measured from samples in the known manner using X-ray fluorescence (XRF) spectrometry. The instrument was X-ray fluorescention Philips PW2400, PSN 620487, (Supplier: Philips, Belgium) software X47. Detection limit for Cl is 1 ppm.

**Electrical breakdown strength (EB63%)**

It follows standard IEC 60243- part 1 (1988).

The method describes a way to measure the electrical breakdown strength for insulation materials on compression moulded plaques.

Definition:

**Eb:** $E_b = U_b/d$
The electrical field strength in the test sample at which breakdown occurs. In homogeneous plaques and films this corresponds to the electrical breakdown strength divided by the thickness of the plaque/film (d), unit: kV/mm. For each BOPP film, 10 individual breakdown measurements are performed. The 10 individual breakdown results per BOPP film are evaluated using a Weibull plot, wherein the 63 percentile corresponds to the breakdown strength (Eb63%). The ß-parameter is the slope of the linear regression curve through these 10 points.
The electrical breakdown strength is determined at 50 Hz within a high voltage cabinet using metal rods as electrodes as described in IEC60243-1 (4.1.2). The voltage is raised over the film/plaque at 2 kV/s until a breakdown occurs.
**Porosity**: BET with $N_2$ gas, ASTM 4641, apparatus Micromeritics Tristar 3000;
sample preparation: at a temperature of 50 °C, 6 hours in vacuum.
**Surface area:** BET with $N_2$ gas ASTM D 3663, apparatus Micromeritics Tristar 3000: sample preparation at a temperature of 50 °C, 6 hours in vacuum.
**Median particle size** ($d_{50}$) is measured with Coulter Counter LS200 at room temperature with n-heptane as medium

**Stepwise Isothermal Segregation Technique** (SIST)

The isothermal crystallisation for SIST analysis was performed in a Mettler TA820 DSC on 3±0.5 mg samples at decreasing temperatures between 200°C and 105°C.

(i) the samples were melted at 225 °C for 5 min.,
(ii) then cooled with 80 °C/min to 145 °C
(iii) held for 2 hours at 145 °C,
(iv) then cooled with 80 °C/min to 135 °C
(v) held for 2 hours at 135 °C,
(vi) then cooled with 80 °C/min to 125 °C
(vii) held for 2 hours at 125 °C,
(viii) then cooled with 80 °C/min to 115 °C
(ix) held for 2 hours at 115 °C,
(x) then cooled with 80 °C/min to 105 °C
(xi) held for 2 hours at 105 °C.

After the last step the sample was cooled down with 80 C/min to -10 °C and the melting curve was obtained by heating the cooled sample at a heating rate of 10°C/min up to 200°C. All measurements were performed in a nitrogen atmosphere. The melt enthalpy is recorded as function of temperature and evaluated through measuring the melt enthalpy of fractions melting within temperature intervals of 50 to 60 °C; 60 to 70 °C; 70 to 80 °C; 80 to 90 °C; 90 to 100 °C; 100 to 110 °C; 110 to 120 °C; 120 to 130 °C; 130 to 140 °C; 140 to 150 °C; 150 to 160 °C; 160 to 170 °C; 170 to 180 °C; 180 to 190 °C; 190 to 200 °C.

The melting curve of the material crystallised this way can be used for calculating the lamella thickness distribution according to Thomson-Gibbs equation (Eq 1.).

$$T_m = T_0\left(1 - \frac{2\sigma}{\Delta H_0 \cdot L}\right) \qquad (1)$$

where $T_0$=457K, $4H_0$ =134x$10^6$ J/m3, σ =0,049.6 J/$m^2$ and L is the lamella thickness. Tensile Modulus is measured according to ISO 527-2 (cross head speed = 50 mm/min; 23 °C) using injection molded specimens as described in EN ISO 1873-2 (dog bone shape, 4 mm thickness).

B. Examples

The used catalyst was prepared according to example 5 of WO 03/051934 wherein the catalyst used therein was replaced by rac-methyl(cyclohexyl)silanediyl bis(2-methyl-4-(4-tert-butylphenyl)indenyl)zirconium dichloride. Rac-methyl(cyclohexyl)silanediyl bis(2-methyl-4-(4-tert-butylphenyl)indenyl)zirconium dichloride was prepared according to WO 2005 105863 A2, examples 17-18.

Catalyst preparation

In a jacketed 90 $dm^3$ glasslined stainless steel reactor the complex solution was prepared at - 5°C adding 0,85 kg of a 24,5 wt% ((2,2,3,3,4,4,5,5,6,6,7,7,8,8,9,9,9-heptadecafluorononyl)oxirane)/toluene solution very slowly (3.4 ml/min) to 13,5 kg 30wt% MAO(methylaluminoxane )/toluene solution. The temperature was increased to 25°C and the solution was stirred for 60 minutes. After addition of 210 g of the complex the solution was stirred for an additional two hours. That mixture was pumped at 51/h to the rotor stator with the rotor stator pair 4M. In the rotor stator with a tip speed of 4 m/s the mixture was mixed with a flow of 32 1/h of hexadecafluoro-1,3-dimethylcyclohexane thus forming an emulsion. The droplets in the emulsion were solidified by an excess flow of 4501/h hexadecafluoro-1,3-dimethylcyclohexane at a temperature of 76°C in a Teflon hose. The hose was connected to a jacketed 160 $dm^3$ stainless steel reactor equipped with a helical mixing element. In this reactor the catalyst particles were separated from the hexadecafluoro-1,3-dimethylcyclohexane by density difference. After the complex solution had been utilised the catalyst particles were dried in the 160 $dm^3$ reactor at a temperature of 70°C and a nitrogen flow of 5 kg/h for 7 h.

Porosity and surface area below the detection limit.

| | |
|---|---|
| mol ratio Co/M (Al/Zr): | 260 mol/mol |
| Mean particle size: | 26 μm |
| Zr content: | 0.53 wt-% |
| Al content: | 34.5 wt-% |

The polymers used in this invention (CE1, E1, E2, except CE2) were produced employing above mentioned catalyst in a continuous two step polymerization process consisting of a bulk polymerization process (loop reactor) and a gas phase polymerization step. Prior to entering the bulk polymerization step, the catalyst is pre-polymerized in a loop-type pre polymerization reactor. Hydrogen levels in the pre polymerization reactor, in the loop reactor and the gas phase reactors were different respectively and adjusted so that the molecular weight (MFR) of the polymer from the first polymerization step was different from the molecular weight (MFR) of the polymer from the second polymerization step. The weight fraction of loop product (split) can be varied between 30 and 70wt%. Temperature in the prepolymerisation reactor was 35 °C, in the loop reactor 70 °C (CE1, E1) or 75 °C (E2), and in the gas phase reactors 85 °C: pressure in the prepolymerisation and in the loop reactor 53 bar, and in the gas phase 30 bar (CE1, E1) or 25 bar (E2). The splits and other process parameters used for creating CE1, E1 and E2 are given in table 1.

**Table 1:** Preparation of E1, E1 and CE1

| | | **CE1** | **E1** | **E2** |
|---|---|---|---|---|
| Split; loop-fraction | [wt%] | 64.0 | 42.0 | 45 |
| prepolymerisation | | | | |
| Catalyst feed | [g/h] | 1.7 | 1.9 | 2.3 |
| Propylene feed | [kg/h] | 54 | 55 | 62 |
| Hydrogen feed | [g/h] | 0.5 | 0.4 | 1.8 |
| Residence time | [h] | 0.4 | 0.4 | 0.4 |
| Loop reactor | | | | |
| H2/C3 | [mol/kmol] | 0.07 | 0.06 | 0.07 |
| Production rate | [kg/h] | 31 | 29 | 23 |
| $MFR_2$ | [g/10min] | 0.7 | 1.1 | 0.9 |
| split | [wt%] | 64 | 42 | 45 |
| 1.GPR | | | | |
| H2/C3 | [mol/kmol] | 3.6 | 2.3 | 1.5 |
| Production rate | [kg/h] | 16 | 28 | 29 |

(continued)

| | | CE1 | E1 | E2 |
|---|---|---|---|---|
| $MFR_2$* | [g/10min] | 2.0 | 4.4 | 3.2 |
| split | [wt%] | 34 | 41 | 55 |
| 2.GPR | | | | |
| H2/C3 | [mol/kmol] | 1.5 | 3.0 | |
| Production rate | [kg/h] | 1 | 12 | |
| $MFR_2$** | [g/10min] | 1.6 | 5.0 | |
| split | [wt%] | 2 | 17 | |
| Final MFR2 (pellets) | [g/10min] | 2 | 5.9 | 2.1 |

* LG(1/MFR1)*wfl + LG(1/MFR2)*wf-2 = LG(1/MFRtotal), wherein
MFR1 is the $MFR_2$ of the polypropylene produced in the loop reactor
MFR2 is the calculated $MFR_2$ of the polypropylene produced in the 1 GPR und
MFRtotal is the $MFR_2$ measured for the polypropylene composition obtained in the
1GPR
** LG(1/MFR1)*wfl + LG(1/MFR2)*wf-2 = LG(1/MFRtotal), wherein
MFR1 is the $MFR_2$ of the polypropylene composition obtained 1 GPR
MFR2 is the calculated $MFR_2$ of the polypropylene produced in the 2GPR und
MFRtotal is the $MFR_2$ measured for the polypropylene composition obtained in the 2GPR
CE1, E1 and E2 were collected from the process as powder and subjected to pelletizing and stabilization with Irganox 1010 (4500ppm).

**Comparative example 2 (CE 2)** is the commercial product HB311BF of Borealis AG CE1, CE2, E1 and E2 were subjected to the following work flow to create the BOPP films: The materials were extruded and cast onto a chill roll to generate quenched film sheets. Settings used were according to table 2

**Table 2:** Cast Film process parameters

| **Extruder** | **Melt temperature** | **Chill roll temperature** | **Cast film thickness** |
|---|---|---|---|
| Brabender single screw, 19mm, 1:3 conical screw design, screen pack | 230°C | 90°C | 500μm |

From each cast film, specimens of size 8.5 by 8.5 cm were cut from the central area of the film. These specimens were subjected to a biaxial orientation process on a laboratory BOPP machine. The square sized specimens were fixed in the stretching frame of the Karo IV stretcher by five clamps on each side. The stretching frame extends and stretches the cast film by a factor of five on each side, the draw ratio is thus 5X5. After the stretching process at given settings, the BOPP film was released from the stretching frame and subjected to the breakdown testing as described. The workflow just described cast film making biaxial orientation and including the breakdown testing was repeated for each material. Reported final BDV results are averages from the two measurements.

**Table 3:** BOPP process parameters

| **Biaxial orientation machine** | **Stretching temp.** | **Stretching speed** | **BOPP film thickness** | **Draw ratio** |
|---|---|---|---|---|
| Karo IV Laboratory Stretcher, Brückner Maschinenbau GmbH, Germany | 147°C | 800%/s | 20 μm | 5X5 |

**Table 4:** Properties

| | | CE 1 | CE 2 | E1 | E2 |
|---|---|---|---|---|---|
| MW | [kg/mol] | 341 | 380 | 260 | 311 |
| MWD | [-] | 4.5 | 7.3 | 3.5 | 3.4 |
| $MFR_2$ | [g/10min] | 2.0 | 2.2 | 5.9 | 2.1 |
| XCS | [wt.-%] | 0.8* | 3.5 | 0.5* | 0.7* |
| Tm | [°C] | 152.8 | 162.3 | 151.8 | 152.6 |
| Tc | [°C] | 112.9 | 112.7 | 113.4 | 114.3 |
| g' | [-] | 0.993 ±0.044 | 0.987±0.006 | 0.939±0.008 | 0.970±0.014 |
| Si | [ppm] | <0.5 | <0.5 | <0.5 | 0.5 |
| Ti | [ppm] | <0.5 | 1.5 | <0.5 | 0.5 |
| TM** | [MPa] | 1222 | | 1317 | 1261 |
| BDV | [kV/mm] 5X5 | 302 ± 25.1 | 309 ± 16 | 325 ± 15 | 312 ± 12 |
| ß | [-] | 8 | 12 | 14 | 17 |
| * measured on reactor powder<br>** tensile modulus | | | | | |

**Table 5:** SIST of CE 1

| **T Range [°C]** | **Lc range [nm]** | **ΔH [J/g]** | **Fraction [wt.-%]** |
|---|---|---|---|
| 50-60 | 2.52 - 2.73 | 0 | 0 |
| 60 - 70 | 2.74 - 2.97 | 0 | 0 |
| 70 - 80 | 2.98 - 3.25 | 0 | 0 |
| 80-90 | 3.26 - 3.60 | 0 | 0 |
| 90 - 100 | 3.61 - 4.03 | 0.08239 | 0.07 |
| 100 - 110 | 4.04 - 4.57 | 0.1769 | 0.17 |
| 110 - 120 | 4.58 - 5.28 | 1.503 | 1.43 |
| 120 - 130 | 5.29 - 6.26 | 3.848 | 3.66 |
| 130 - 140 | 6.27 - 7.69 | 9.969 | 9.49 |
| 140 - 150 | 7.70 - 9.95 | 33.26 | 31.65 |
| 150 - 160 | 9.96 - 14.09 | 38.12 | 36.27 |
| > 160 | > 14.09 | 18.14 | 17.26 |

**Table 6:** SIST of CE 2

| T Range [°C] | Lc range [nm] | ΔH [J/g] | Fraction [wt.-%] |
|---|---|---|---|
| 50 - 60 | 2.52 - 2.73 | 0 | 0 |
| 60 - 70 | 2.74 - 2.97 | 0 | 0 |
| 70 - 80 | 2.98 - 3.25 | 0 | 0 |
| 80 - 90 | 3.26 - 3.60 | 0 | 0 |
| 90 - 100 | 3.61 - 4.03 | 0 | 0 |
| 100 - 110 | 4.04 - 4.57 | 0.068574 | 0.06 |
| 110 - 120 | 4.58 - 5.28 | 0.3764 | 0.35 |
| 120 - 130 | 5.29 - 6.26 | 1.02 | 0.96 |
| 130 - 140 | 6.27 - 7.69 | 3.182 | 2.99 |
| 140 - 150 | 7.70 - 9.95 | 12.3 | 11.55 |
| 150 - 160 | 9.96 - 14.09 | 31.55 | 29.62 |
| > 160 | > 14.09 | 58.156 | 54.06 |

**Table 7:** SIST of E1

| T Range [°C] | Lc range [nm] | ΔH [J/g] | Fraction [wt.-%] |
|---|---|---|---|
| 50 - 60 | 2.52 - 2.73 | 0 | 0 |
| 60 - 70 | 2.74 - 2.97 | 0.08982 | 0.082 |
| 70 - 80 | 2.98 - 3.25 | 0.2205 | 0.20 |
| 80 - 90 | 3.26 - 3.60 | 0.4576 | 0.42 |
| 90 - 100 | 3.61 - 4.03 | 0.7457 | 0.68 |
| 100 - 110 | 4.04 - 4.57 | 0.864 | 0.79 |
| 110 - 120 | 4.58 - 5.28 | 2.322 | 2.11 |
| 120 - 130 | 5.29 - 6.26 | 4.933 | 4.49 |
| 130 - 140 | 6.27 - 7.69 | 11.03 | 10.04 |
| 140 - 150 | 7.70 - 9.95 | 32.93 | 29.96 |
| 150 - 160 | 9.96 - 14.09 | 36.16 | 32.90 |
| > 160 | > 14.09 | 20.17 | 18.35 |

**Table 8:** SIST of E 2

| T Range [°C] | Lc range [nm] | ΔH [J/g] | Fraction [wt.- %] |
|---|---|---|---|
| 50 - 60 | 2.52 - 2.73 | 0 | 0 |
| 60 - 70 | 2.74 - 2.97 | 0 | 0 |
| 70 - 80 | 2.98 - 3.25 | 0 | 0 |
| 80 - 90 | 3.26 - 3.60 | 0.07929 | 0.08 |
| 90 - 100 | 3.61 - 4.03 | 0.2756 | 0.27 |
| 100 - 110 | 4.04 - 4.57 | 0.3727 | 0.36 |
| 110 - 120 | 4.58 - 5.28 | 1.573 | 1.53 |

(continued)

| T Range [°C] | Lc range [nm] | ΔH [J/g] | Fraction [wt.- %] |
|---|---|---|---|
| 120 - 130 | 5.29 - 6.26 | 3.932 | 3.82 |
| 130 - 140 | 6.27 - 7.69 | 9.857 | 9.59 |
| 140 - 150 | 7.70 - 9.95 | 31.16 | 30.31 |
| 150 - 160 | 9.96 - 14.09 | 35 | 34.051 |
| > 160 | > 14.09 | 20.53 | 19.97 |

**Claims**

**1.** Process for the preparation of a polypropylene in a sequential polymerization process comprising at least two reactors connected in series, wherein said process comprises the steps of

(A) producing in a first reactor (R-1) a first polypropylene fraction (PP-1),
(B) transferring said first polypropylene fraction (PP-1) in a second reactor (R-2),
(C) polymerizing in said second reactor (R-2) and in the presence of said first polypropylene fraction (PP-1) a second polypropylene fraction (PP-2) obtaining polypropylene composition (PP-C),

wherein

(a) said first polypropylene fraction (PP-1)

(i) has a melt flow rate $MFR_2$ (230 °C) measured according to ISO 1133 of

(α) not more than 1.5 g/10min,
or
(β) of more than 2.0 g/10min,
and

(ii) comprises units derived from propylene and optionally at least one $C_2$ to $C_{10}$ α-olefin different to propylene,

(b) the polypropylene composition (PP-C) has a melt flow rate $MFR_2$ (230 °C) measured according to ISO 1133 of more than 2.0 g/10min,
and
(c) the melt flow rate $MFR_2$ (230 °C) of the polypropylene composition (PP-C) is different to the melt flow rate $MFR_2$ (230 °C) of the first polypropylene fraction (PP-1),
wherein further
in the first reactor (R-1) and second reactor (R-2) the polymerization takes place in the presence of a solid catalyst system (SCS), said solid catalyst system (SCS)
(d) has a porosity of less than 1.40 ml/g measured according to ASTM 4641 and/or a surface area of lower than 25 $m^2$/g measured according to ASTM D 3663,
(e) comprises a catalyst being the organo-zirconium compound of formula (I)

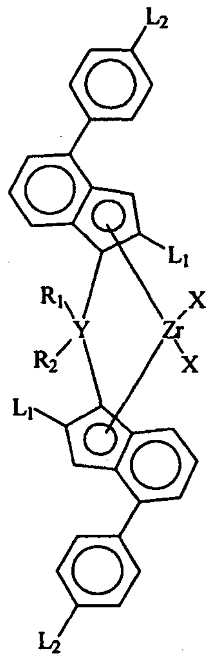

wherein

X are ligands with a σ-bond to the zirconium (Zr),
$L_1$ are identical residues selected from the group consisting of linear $C_1$ to $C_{20}$ alkyl, branched $C_3$ to $C_{20}$ alkyl, linear $C_1$ to $C_{20}$ alkenyl, branched $C_4$ to $C_{20}$ alkenyl, $C_4$ to $C_{12}$ cycloalkyl, $C_1$ to $C_{20}$ alkyl substituted $C_5$ to $C_{20}$ cycloalkyl, $C_6$ to $C_{20}$ aryl, and $C_5$ to $C_{20}$ cycloalkyl substituted $C_1$ to $C_{20}$ alkyl wherein the cycloalkyl residue is substituted by $C_1$ to $C_{20}$ alkyl,
$L_2$ are identical residues selected from the group consisting of linear $C_1$ to $C_{20}$ alkyl, branched $C_3$ to $C_{20}$ alkyl, linear $C_1$ to $C_{20}$ alkenyl, branched $C_4$ to $C_{20}$ alkenyl, $C_4$ to $C_{12}$ cycloalkyl, $C_1$ to $C_{20}$ alkyl substituted $C_5$ to $C_{20}$ cycloalkyl, and $C_6$ to $C_{20}$ aryl,
Y is C, Si or Ge, preferably Si,
$R_1$ is $C_1$ to $C_{20}$ alkyl, $C_4$ to $C_{10}$ cycloalkyl, $C_6$-$C_{12}$ aryl, $C_7$-$C_{12}$ arylalkyl, or trimethylsilyl,
$R_2$ is $C_1$ to $C_{20}$ alkyl, $C_4$ to $C_{10}$ cycloalkyl, $C_6$-$C_{12}$ aryl, $C_7$-$C_{12}$ arylalkyl, or trimethylsilyl,

and
(f) comprises a cocatalyst (Co) comprising an element (E) of group 13 of the periodic table (IUPAC).

**2.** Process according to claim 1, wherein

(a) the residues "$L_2$" are linear $C_1$ to $C_{20}$ alkyl or branched $C_3$ to $C_{20}$ alkyl, like $-C(CH_3)_3$, and/or
(b) the residues "$R_1$" and "$R_2$" are chemically different,
and/or
(c) the ligands "X" are independently selected from the group consisting of hydrogen, halogen, $C_1$ to $C_{20}$ alkyl, $C_1$ to $C_{20}$ alkoxy, $C_2$ to $C_{20}$ alkenyl, $C_2$ to $C_{20}$ alkynyl, $C_3$ to $C_{12}$ cycloalkyl, $C_6$ to $C_{20}$ aryl, $C_6$ to $C_{20}$ aryloxy, $C_7$ to $C_{20}$ arylalkyl, $C_7$ to $C_{20}$ arylalkenyl, -SR", $-PR''_3$, $-SiR''_3$, $-OSiR''_3$ and $-NR''_2$,

wherein each R" is independently hydrogen, $C_1$ to $C_{20}$ alkyl, $C_2$ to $C_{20}$ alkenyl, $C_2$ to $C_{20}$ alkynyl, $C_3$ to $C_{12}$ cycloalkyl or $C_6$ to $C_{20}$ aryl.

**3.** Process according to claim 1 or 2, wherein the organo-zirconium compound has the formula (II)

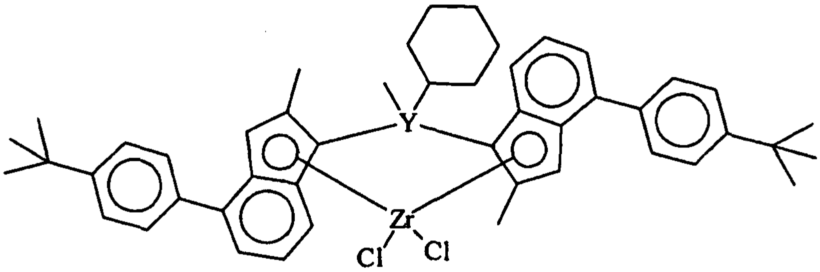

(II)

wherein "Y" is C or Si, preferably Si.

**4.** Process according to anyone of the preceding claims, wherein the cocatalyst (Co) comprises a compound of Al.

**5.** Process according to anyone of the preceding claims, wherein the cocatalyst (Co) is a trialkylaluminium and/or aluminoxane compound.

**6.** Process according to anyone of the preceding claims, wherein the solid catalyst system (SCS) does not comprise any catalytically inert support material, such as organic and inorganic support materials, like silica, $MgCl_2$ or porous polymeric material.

**7.** Process according to anyone of the preceding claims, wherein the solid catalyst system (SCS) has a mean particle size of not more than 500 $\mu$m.

**8.** Process according to any one of the preceding claims, wherein the first reactor (R-1) is a slurry reactor (SR), preferably a loop reactor (LR), and/or the second reactor (R-2) is a gas phase reactor (GPR-1).

**9.** Process according to any one of the preceding claims, wherein the weight ratio between the first polypropylene (PP-1) and the second polypropylene (PP-2) [kg PP-1/kg PP-2] is equal or below 1.5.

**10.** Process according to any one of the preceding claims, wherein

(a) the first polypropylene fraction (PP-1) is a propylene homopolymer
and/or
(b) the polypropylene composition (PP-C) has a branching index g' of at least 0.90.

**11.** Process according to any one of the preceding claims, wherein

(a) polypropylene composition (PP-C) has a xylene soluble content of not more than 1.5 wt.-%,
and/or
(b) the polypropylene composition (PP-C) has a silicon residue content of below 0.5 ppm.

**12.** Process according to any one of the preceding claims, wherein prior to the polymerization in the first reactor (R-1) a pre-polymerization step is carried out in which the solid catalyst system (SCS) is pre-polymerized with propylene.

**13.** Process according to claim 12, wherein in the pre-polymerization

(a) the temperature is between 10 to 50 °C
and/or
(b) the pressure between 40 to 80 bar.

**14.** Process according to claim 8, wherein the polypropylene composition (PP-C) is transferred in a third reactor (R-3) being a second gas phase reactor (GPR-2), in said second gas phase reactor (GPR-2) a propylene random copolymer or a propylene homopolymer is produced.

## Patentansprüche

**1.** Verfahren zur Herstellung eines Polypropylens in einem aufeinander folgenden Polymerisations-Verfahren, umfassend mindestens zwei in Reihe verbundene Reaktoren, wobei das Verfahren die Schritte umfasst von

(A) Erzeugen in einem ersten Reaktor (R-1) einer ersten Polypropylen-Fraktion (PP-1),
(B) Überführen der ersten Polypropylen-Fraktion (PP-1) in einen zweiten Reaktor (R-2),
(C) Polymerisieren in dem zweiten Reaktor (R-2) und in Gegenwart von der ersten Polypropylen-Fraktion (PP-1) einer zweiten Polypropylen-Fraktion (PP-2) unter Gewinnen von Polypropylen-Zusammensetzung (PP-C),

wobei

(a) die erste Polypropylen-Fraktion (PP-1)

(i) eine Schmelze-Fließ-Rate $MFR_2$ (230°C), gemessen gemäß ISO 1133, von

($\alpha$) nicht mehr als 1,5 g/10 min,
oder
(ß) von mehr als 2,0 g/10 min, aufweist,
und

(ii) Einheiten umfasst, abgeleitet von Propylen und gegebenenfalls mindestens einem von Propylen verschiedenen $C_2$ bis $C_{10}$ $\alpha$-Olefin,

(b) die Polypropylen-Zusammensetzung (PP-C) eine Schmelze-Fließ-Rate $MFR_2$ (230°C), gemessen gemäß ISO 1133, von mehr als 2,0 g/10 min aufweist,
und
(c) die Schmelze-Fließ-Rate $MFR_2$ (230°C) der Polypropylen-Zusammensetzung (PP-C) von der Schmelze-Fließ-Rate $MFR_2$ (230°C) der ersten Polypropylen-Fraktion (PP-1) verschieden ist,
wobei weiterhin
in dem ersten Reaktor (R-1) und zweiten Reaktor (R-2) die Polymerisation in Gegenwart von einem festen Katalysator-System (SCS) stattfindet, wobei das feste Katalysator-System (SCS)
(d) eine Porosität von weniger als 1,40 ml/g, gemessen gemäß ASTM 4641, und/oder eine Oberfläche von geringer als 25 $m^2/g$, gemessen gemäß ASTM D 3663, aufweist,
(e) einen Katalysator umfasst, der die Organo-Zirkonium-Verbindung der Formel (I)

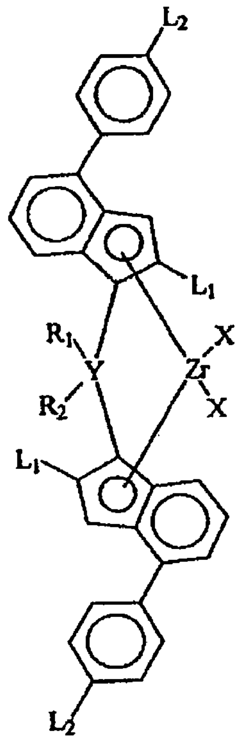

ist, wobei

X Liganden mit einer σ-Bindung an dem Zirkonium (Zr) darstellen,
$L_1$ identische Reste darstellen, ausgewählt aus der Gruppe, bestehend aus linearem $C_1$ bis $C_{20}$-Alkyl, verzweigtem $C_3$ bis $C_{20}$-Alkyl, linearem $C_1$ bis $C_{20}$-Alkenyl, verzweigtem $C_4$ bis $C_{20}$-Alkenyl, $C_4$ bis $C_{12}$-Cycloalkyl, $C_1$ bis $C_{20}$-Alkyl substituiertem $C_5$ bis $C_{20}$-Cycloalkyl, $C_6$ bis $C_{20}$-Aryl und $C_5$ bis $C_{20}$-Cycloalkyl substituier-tem $C_1$ bis $C_{20}$-Alkyl, wobei der Cycloalkyl-Rest mit $C_1$ bis $C_{20}$-Alkyl substituiert ist,
$L_2$ identische Reste darstellen, ausgewählt aus der Gruppe, bestehend aus linearem $C_1$ bis $C_{20}$-Alkyl, verzweigtem $C_3$ bis $C_{20}$-Alkyl, linearem $C_1$ bis $C_{20}$-Alkenyl, verzweigtem $C_4$ bis $C_{20}$-Alkenyl, $C_4$ bis $C_{12}$-Cycloalkyl, $C_1$ bis $C_{20}$-Alkyl substituiertem $C_5$ bis $C_{20}$-Cycloalkyl und $C_6$ bis $C_{20}$-Aryl,
Y C, Si oder Ge, vorzugsweise Si, darstellt,
$R_1$ $C_1$ bis $C_{20}$-Alkyl, $C_4$ bis $C_{10}$-Cycloalkyl, $C_6$-$C_{12}$-Aryl, $C_7$-$C_{12}$-Arylalkyl oder Trimethylsilyl darstellt,
$R_2$ $C_1$ bis $C_{20}$-Alkyl, $C_4$ bis $C_{10}$-Cycloalkyl, $C_6$-$C_{12}$-Aryl, $C_7$-$C_{12}$-Arylalkyl oder Trimethylsilyl darstellt,

und
(f) einen Cokatalysator (Co), umfassend ein Element (E) der Gruppe 13 des Periodensystems (IUPAC), umfasst.

**2.** Verfahren nach Anspruch 1, wobei

(a) die Reste "$L_2$" lineares $C_1$ bis $C_{20}$-Alkyl oder verzweigtes $C_3$ bis $C_{20}$-Alkyl, wie $-C(CH_3)_3$, darstellen, und/oder
(b) die Reste "$R_1$" und "$R_2$" chemisch verschieden sind,
und/oder
(c) die Liganden "X" unabhängig ausgewählt sind aus der Gruppe, bestehend aus Wasserstoff, Halogen, $C_1$ bis $C_{20}$-Alkyl, $C_1$ bis $C_{20}$-Alkoxy, $C_2$ bis $C_{20}$-Alkenyl, $C_2$ bis $C_{20}$-Alkinyl, $C_3$ bis $C_{12}$-Cycloalkyl, $C_6$ bis $C_{20}$-Aryl, $C_6$ bis $C_{20}$-Aryloxy, $C_7$ bis $C_{20}$-Arylalkyl, $C_7$ bis $C_{20}$-Arylalkenyl, -SR", $-PR''_3$, $-SiR''_3$, $-OSiR''_3$ und $-NR''_2$,

wobei jedes R" unabhängig Wasserstoff, $C_1$ bis $C_{20}$-Alkyl, $C_2$ bis $C_{20}$-Alkenyl, $C_2$ bis $C_{20}$-Alkinyl, $C_3$ bis $C_{12}$-Cycloalkyl oder $C_6$ bis $C_{20}$-Aryl darstellt.

**3.** Verfahren nach Anspruch 1 oder 2, wobei die Organo-Zirkonium-Verbindung die Formel (II)

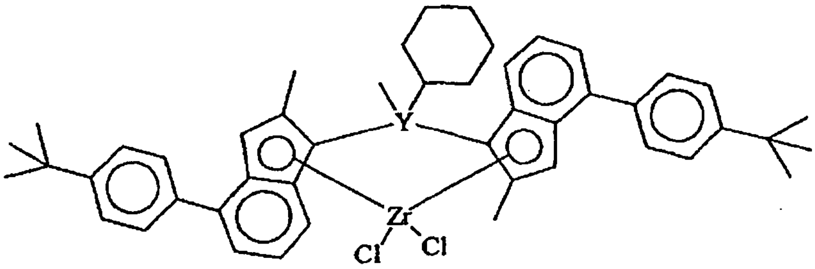

(II)

aufweist, worin "Y" C oder Si, vorzugsweise Si, darstellt.

4. Verfahren nach einem der vorangehenden Ansprüche, wobei der Cokatalysator (Co) eine Verbindung von Al umfasst.

5. Verfahren nach einem der vorangehenden Ansprüche, wobei der Cokatalysator (Co) eine Trialkylaluminium- und/oder Aluminoxan-Verbindung ist.

6. Verfahren nach einem der vorangehenden Ansprüche, wobei das feste Katalysator-System (SCS) kein katalytisch inertes Träger-Material, wie organische und anorganische Träger-Materialien, wie Siliziumdioxid, $MgCl_2$ oder poröses polymeres Material, umfasst.

7. Verfahren nach einem der vorangehenden Ansprüche, wobei das feste Katalysator-System (SCS) eine mittlere Teilchengröße von nicht mehr als 500 $\mu$m aufweist.

8. Verfahren nach einem der vorangehenden Ansprüche, wobei der erste Reaktor (R-1) ein Suspensions-Reaktor (SR), vorzugsweise ein Schlaufen-Reaktor (LR), ist und/oder der zweite Reaktor (R-2) ein Gas-Phasen-Reaktor (GPR-1) ist.

9. Verfahren nach einem der vorangehenden Ansprüche, wobei das Gewichtsverhältnis zwischen dem ersten Polypropylen (PP-1) und dem zweiten Polypropylen (PP-2) [kg PP-1 / kg PP-2] gleich oder unter 1,5 ist.

10. Verfahren nach einem der vorangehenden Ansprüche, wobei

(a) die erste Polypropylen-Fraktion (PP-1) ein Propylen-Homopolymer ist
und/oder
(b) die Polypropylen-Zusammensetzung (PP-C) einen Verzweigungs-Index g' von mindestens 0,90 aufweist.

11. Verfahren nach einem der vorangehenden Ansprüche, wobei

(a) Polypropylen-Zusammensetzung (PP-C) einen in Xylol löslichen Gehalt von nicht mehr als 1,5 Gew.-% aufweist,
und/oder
(b) die Polypropylen-Zusammensetzung (PP-C) einen Silizium-Rest-Gehalt von unter 0,5 ppm aufweist.

12. Verfahren nach einem der vorangehenden Ansprüche, wobei vor der Polymerisation in dem ersten Reaktor (R-1) ein Vor-Polymerisations-Schritt ausgeführt wird, in dem das feste Katalysator-System (SCS) mit Propylen vorpolymerisiert wird.

13. Verfahren nach Anspruch 12, wobei in der Vor-Polymerisation

(a) die Temperatur zwischen 10 bis 50°C liegt und/oder
(b) der Druck zwischen 40 bis 80 bar liegt.

14. Verfahren nach Anspruch 8, wobei die Polypropylen-Zusammensetzung (PP-C) in einen dritten Reaktor (R-3) überführt wird, der einen zweiten Gas-Phasen-Reaktor (GPR-2) darstellt, wobei in dem zweiten Gas-Phasen-Reaktor

(GPR-2) ein statistisches Propylen-Copolymer oder ein Propylen-Homopolymer hergestellt wird.

## Revendications

**1.** Procédé pour la préparation d'un polypropylène dans un procédé de polymérisation séquentielle comprenant au moins deux réacteurs connectés en série, lequel procédé comprend les étapes

(A) de production d'une première fraction de polypropylène (PP-1) dans un premier réacteur (R-1),
(B) de transfert de ladite première fraction de polypropylène (PP-1) dans un deuxième réacteur (R-2),
(C) de polymérisation, dans ledit deuxième réacteur (R-2) et en présence de ladite première fraction de polypropylène (PP-1), d'une deuxième fraction de polypropylène (PP-2), ce qui donne une composition de polypropylène (PP-C),

dans lequel

(a) ladite première fraction de polypropylène (PP-1)

(i) présente un indice de fluage $MFR_2$ (230°C), mesuré conformément à la norme ISO 1133,

($\alpha$) ne dépassant pas 1,5 g/10 min,
ou
($\beta$) ne dépassant pas 2,0 g/10 min,
et

(ii) comprend des motifs dérivés de polypropylène et éventuellement d'au moins une $\alpha$-oléfine en $C_2$ à $C_{10}$ différente du propylène,

(b) la composition de polypropylène (PP-C) présente un indice de fluage $MFR_2$ (230°C), mesuré conformément à la norme ISO 1133, ne dépassant pas 2,0 g/10 min,
et
(c) l'indice de fluage $MFR_2$ (230°C) de la composition de polypropylène (PP-C) est différent de l'indice de fluage $MFR_2$ (230°C) de la première fraction de polypropylène (PP-1),
dans lequel en outre
dans le premier réacteur (R-1) et le deuxième réacteur (R-2), la polymérisation se déroule en présence d'un système catalyseur solide (SCS), ledit système catalyseur solide (SCS)
(d) présentant une porosité, mesurée conformément à la norme ASTM 4641, inférieure à 1,40 ml/g, et/ou une surface spécifique, mesurée conformément à la norme ASTM D 3663, inférieure à 25 $m^2$/g,
(e) comprenant un catalyseur qui est un composé organique du zirconium de formule (I)

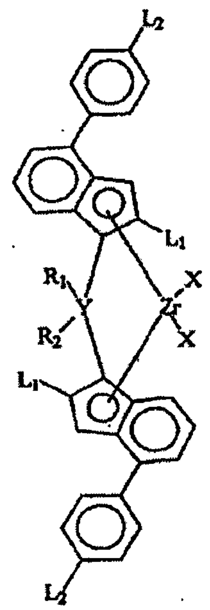

dans laquelle
les X sont des ligands liés par liaison σ au zirconium (Zr),
les $L_1$ sont des résidus identiques choisis dans l'ensemble constitué par les radicaux alkyle linéaires en $C_1$ à $C_{20}$, alkyle ramifiés en $C_3$ à $C_{20}$, alcényle linéaires en $C_1$ à $C_{20}$, alcényle ramifiés en $C_4$ à $C_{20}$, cycloalkyle en $C_4$ à $C_{12}$, cycloalkyle en $C_5$ à $C_{20}$ à substitution alkyle en $C_1$ à $C_{20}$, aryle en $C_6$ à $C_{20}$, et alkyle en $C_1$ à $C_{20}$ à substitution cycloalkyle en $C_5$ à $C_{20}$ où le résidu cycloalkyle est substitué par un alkyle en $C_1$ à $C_{20}$,
les $L_2$ sont des résidus identiques choisis dans l'ensemble constitué par les radicaux alkyle linéaires en $C_1$ à $C_{20}$, alkyle ramifiés en $C_3$ à $C_{20}$, alcényle linéaires en $C_1$ à $C_{20}$, alcényle ramifiés en $C_4$ à $C_{20}$, cycloalkyle en $C_4$ à $C_{12}$, cycloalkyle en $C_5$ à $C_{20}$ à substitution alkyle en $C_1$ à $C_{20}$, et aryle en $C_6$ à $C_{20}$,
Y est C, Si ou Ge, de préférence Si,
$R_1$ est un radical alkyle en $C_1$ à $C_{20}$, cycloalkyle en $C_4$ à $C_{10}$, aryle en $C_6$ à $C_{12}$, arylalkyle en $C_7$ à $C_{12}$, ou triméthylsilyle,
$R_2$ est un radical alkyle en $C_1$ à $C_{20}$, cycloalkyle en $C_4$ à $C_{10}$, aryle en $C_6$ à $C_{12}$, arylalkyle en $C_7$ à $C_{12}$, ou triméthylsilyle,
et
(f) comprenant un cocatalyseur (Co) contenant un élément (E) du Groupe 13 du Tableau Périodique (IUPAC).

**2.** Procédé selon la revendication 1, dans lequel

(a) les résidus "$L_2$" sont des radicaux alkyle linéaires en $C_1$ à $C_{20}$ ou alkyle ramifiés en $C_3$ à $C_{20}$, tels que $-C(CH_3)_3$, et/ou
(b) les résidus "$R_1$" et "$R_2$" sont chimiquement différents, et/ou
(c) les ligands "X" sont indépendamment choisis dans l'ensemble constitué par l'hydrogène, les halogènes, et les radicaux alkyle en $C_1$ à $C_{20}$, alcoxy en $C_1$ à $C_{20}$, alcényle en $C_2$ à $C_{20}$, alcynyle en $C_2$ à $C_{20}$, cycloalkyle en $C_3$ à $C_{12}$, aryle en $C_6$ à $C_{20}$, aryloxy en $C_6$ à $C_{20}$, arylalkyle en $C_7$ à $C_{20}$, arylalcényle en $C_7$ à $C_{20}$, -SR", -PR"$_3$, -SiR"$_3$, -OSiR"$_3$ et -NR"$_2$, où chaque R" est indépendamment l'hydrogène ou un radical alkyle en $C_1$ à $C_{20}$, alcényle en $C_2$ à $C_{20}$, alcynyle en $C_2$ à $C_{20}$, cycloalkyle en $C_3$ à $C_{12}$ ou aryle en $C_6$ à $C_{20}$.

**3.** Procédé selon la revendication 1 ou 2, dans lequel le composé organique du zirconium est de formule (II)

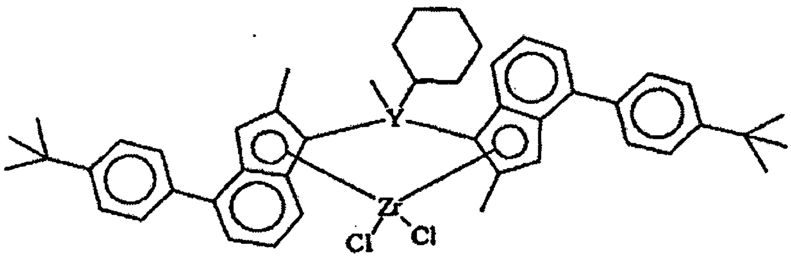

(II)

dans laquelle "Y" est C ou Si, de préférence Si.

**4.** Procédé selon l'une quelconque des revendications précédentes, dans lequel le cocatalyseur (Co) comprend un composé d'Al.

**5.** Procédé selon l'une quelconque des revendications précédentes, dans lequel le cocatalyseur (Co) est un composé trialkyl-aluminium et/ou aluminoxane.

**6.** Procédé selon l'une quelconque des revendications précédentes, dans lequel le système catalyseur solide (SCS) ne comprend aucun matériau de support catalytiquement inerte, tel que les matériaux de support organiques et inorganiques, tels que la silice, $MgCl_2$, ou un matériau polymère poreux.

**7.** Procédé selon l'une quelconque des revendications précédentes, dans lequel le système catalyseur solide (SCS) présente une granulométrie moyenne ne dépassant pas 500 μm.

**8.** Procédé selon l'une quelconque des revendications précédentes, dans lequel le premier réacteur (R-1) est un réacteur en suspension (SR), de préférence un réacteur à boucle (LR), et/ou le deuxième réacteur (R-2) est un réacteur en phase gazeuse (GPR-1).

**9.** Procédé selon l'une quelconque des revendications précédentes, dans lequel le rapport en poids entre le premier polypropylène (PP-1) et le deuxième polypropylène (PP-2) [kg PP-1 / kg PP-2] est égal ou inférieur à 1,5.

**10.** Procédé selon l'une quelconque des revendications précédentes, dans lequel

(a) la première fraction de polypropylène (PP-1) est un homopolymère de propylène
et/ou
(b) la composition de polypropylène (PP-C) présente un indice de ramification g' d'au moins 0,90.

**11.** Procédé selon l'une quelconque des revendications précédentes, dans lequel

(a) la composition de polypropylène (PP-C) présente une teneur en composés solubles dans le xylène ne dépassant pas 1,5 % en poids,
et/ou
(b) la composition de polypropylène (PP-C) présente une teneur en silicium résiduel inférieure à 0,5 ppm.

**12.** Procédé selon l'une quelconque des revendications précédentes, dans lequel, avant la polymérisation dans le premier réacteur (R-1), une étape de pré-polymérisation est mise en oeuvre, dans laquelle le système catalyseur solide (SCS) est pré-polymérisé avec du propylène.

**13.** Procédé selon la revendication 12, dans lequel, dans la pré-polymérisation

(a) la température est comprise entre 10 et 50°C,
et/ou
(b) la pression est comprise entre 40 et 80 bar.

**14.** Procédé selon la revendication 8, dans lequel la composition de polypropylène (PP-C) est transférée dans un

troisième réacteur (R-3) qui est un deuxième réacteur en phase gazeuse (GPR-2) et, dans ledit deuxième réacteur en phase gazeuse (GPR-2), un copolymère statistique de propylène ou un homopolymère de propylène est produit.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 03051934 A
- WO 2006069733 A
- EP 1847552 A
- EP 0887379 A
- WO 9212182 A
- WO 9858976 A
- WO 0148034 A
- WO 2005105863 A2


### Non-patent literature cited in the description


- **T. HAYASHI ; Y. INOUE ; R. CHÜJÖ ; T. ASAKURA.** *Polymer,* 1988, vol. 29, 138-43
- **CHUJO R et al.** *Polymer,* 1994, vol. 35, 339
- **G. SAUNDERS ; P. A. G: CORMACK ; S. GRAHAM ; D. C. SHERRINGTON.** *Macromolecules,* 2005, vol. 38, 6418-6422
- Molecular Weight Sensitive Detectors. **C. JACKSON ; H. G. BARTH.** Handbook of Size Exclusion Chromatography and related techniques. Marcel Dekker, 2004, 103